# EUROPEAN PATENT APPLICATION

(11) **EP 4 761 333 A1**
(43) Date of publication of application: **17.06.2026**
(21) Application number: 23951109.0
(22) Date of filing: 05.09.2023
(51) Int. Cl.: H04W 24/06

(54) **COMMUNICATION METHOD AND RELATED DEVICE**

(71) Applicant: HUAWEI TECHNOLOGIES CO., LTD., Shenzhen 518129 (CN)
(72) Inventor: WANG, Jian, Shenzhen, Guangdong 518129 (CN); LI, Rong, Shenzhen, Guangdong 518129 (CN)
(74) Representative: Gill Jennings & Every LLP
(86) International application number: PCT/CN2023/116950
(87) International publication number: WO 2025/050280

(57) **Abstract**

This application provides a communication method and a related device, to indicate two modes: an artificial intelligence (artificial intelligence, AI) inference (inference) mode and an AI training (training) mode in a communication network, so that computing power of a communication node can be applied to AI task processing. In the method, a terminal device receives first indication information, where the first indication information indicates that processing modes of K AI models are a first mode or a second mode, the K AI models correspond to a first AI task, and K is a positive integer; and the first mode includes AI inference, and the second mode includes AI training; and the terminal device processes the K AI models in the first mode or the second mode.

## Description

### TECHNICAL FIELD

This application relates to the communication field, and in particular, to a communication method and a related device.

### BACKGROUND

Wireless communication may be communication through transmission among a plurality of communication nodes without using a conductor or a cable. Usually, as different communication nodes, a network device and a terminal device may communicate with each other through wireless communication.

Currently, in a wireless communication system, a communication node usually has a signal sending and receiving capability and a computing capability. A network device with a computing capability is used as an example. The computing capability of the network device is mainly for providing support for a signal sending and receiving capability with computing power (for example, computation on a time-domain resource, a frequency-domain resource, and the like that carry signals), to implement a communication task between the network device and another communication node.

However, in a communication network, in addition to providing support for the foregoing communication task with computing power, the computing capability of the communication node may still be underutilized. Therefore, how to use the computing capability is a technical problem to be urgently resolved.

### SUMMARY

This application provides a communication method and a related device, to indicate two modes: an artificial intelligence (artificial intelligence, AI) inference (inference) mode and an AI training (training) mode in a communication network, so that computing power of a communication node can be applied to AI task processing.

A first aspect of this application provides a communication method. The method is performed by a terminal device, or the method is performed by some components (such as a processor, a chip, or a chip system) in a terminal device, or the method may be implemented by a logic module or software that can implement all or some functions of a terminal device. In the first aspect and a possible implementation thereof, an example in which the method is performed by a terminal device is used for description. In the method, the terminal device receives first indication information, where the first indication information indicates that processing modes of K AI models are a first mode or a second mode, the K AI models correspond to a first AI task, and K is a positive integer; and the first mode includes AI inference, and the second mode includes AI training; and the terminal device processes the K AI models in the first mode or the second mode.

According to the foregoing technical solution, the first indication information received by the terminal device indicates that the processing modes of the K AI models are the first mode or the second mode. Then, the terminal device may process the K AI models in the first mode or the second mode based on the first indication information. The first mode includes AI inference, and the second mode includes AI training. Therefore, the terminal device, as a communication node in a communication system, can perform AI inference or AI training on the AI model based on the first indication information, so that computing power of the communication node can be applied to AI task processing, and the two modes: the AI inference (inference) mode and the AI training (training) mode can be indicated in a communication network.

It should be understood that one AI task corresponds to one or more AI models. It may be understood that an execution process of one AI task includes processing on the one or more AI models by an AI node. The AI node may include the terminal device. Optionally, the AI node may further include another device, for example, a network device or a first device mentioned below.

It should be understood that, in the foregoing technical solution, the first AI task may correspond to P AI models, and K is less than or equal to P. In other words, the K AI models processed by the terminal device may be some of one or more AI models corresponding to the first AI task, or the K AI models processed by the terminal device may be all of one or more AI models corresponding to the first AI task. The K AI models correspond to the first AI task, and may be indicated by an identifier of the first AI task and identifiers of the K AI models.

Optionally, in the foregoing technical solution, the K AI models indicated by the first indication information correspond to a same AI task (that is, the first AI task). In other words, an indication that is of the processing mode of the AI model and that is received by the terminal device may be implemented at the granularity of an AI task. To be specific, one or more AI models included in the same AI task may be indicated based on the first indication information, to reduce overheads and improve efficiency. However, during actual application, the K AI models indicated by the first indication information may be decoupled from the AI task. In other words, an indication that is of the processing mode of the AI model and that is received by the terminal device may be implemented at the granularity of an AI model, to improve flexibility of solution implementation. Similarly, other information/data (such as management information, indication information indicating an AI model, data associated with an AI model, and indication information indicating a supported processing mode) mentioned below may be indicated at the granularity of an AI task, or may be indicated at the granularity of an AI model.

It should be understood that the first mode includes AI inference. It may be understood that, in the first mode, an AI node performs at least AI inference on an AI model. That the AI node (such as the terminal device, and a network device or a first device that may participate in an AI task) performs AI inference on the AI model may include a process in which a communication apparatus inputs input data to the AI model, and obtains output data corresponding to the input data through inference of the AI model. Similarly, the second mode includes AI training. It may be understood that, in the second mode, an AI node performs at least AI training on an AI model. That the AI node (such as the terminal device, and a network device or a first device that may participate in an AI task) performs AI training on the AI model may include a process in which the communication apparatus inputs input data and label data to the AI model to update a parameter of the AI model.

In this application, the AI model may be replaced with a learning model, an AI learning model, a machine learning model, a neural network, an AI network, or the like.

In a possible implementation of the first aspect, the method further includes: The terminal device receives indication information indicating management information of the K AI models.

According to the foregoing technical solution, the terminal device may further receive the indication information indicating the management information of the K AI models. Then, the terminal device can manage the K AI models based on the indication information. In this way, the AI model can be managed in a communication network based on the indication information.

Optionally, the management information includes at least one of the following: model selection, model enabling, model update, model switching, and model fallback.

In a possible implementation of the first aspect, after the terminal device processes the K AI models in the first mode or the second mode, the method further includes: The terminal device sends model performance measurement results of the K AI models.

According to the foregoing technical solution, after the terminal device processes the K AI models in the first mode or the second mode, the terminal device may measure model performance of the K AI models to obtain the model performance measurement results, and then the terminal device may send the model performance measurement results of the K AI models, to measure performance of an AI model deployed in a communication network.

In a possible implementation of the first aspect, the method further includes: The terminal device receives indication information indicating to report the model performance measurement results of the K AI models.

According to the foregoing technical solution, the terminal device may further receive the indication information indicating to report the model performance measurement results of the K AI models, and send the model performance measurement results of the K AI models based on the indication information, to indicate measurement on performance of an AI model deployed in a communication network.

In a possible implementation of the first aspect, the method further includes: The terminal device sends data associated with the K AI models.

According to the foregoing technical solution, the terminal device may further send the data associated with the K AI models, to collect data associated with an AI model deployed in a communication network.

Optionally, in the first mode, the data associated with the K AI models includes input data of the K AI models; and/or in the second mode, the data associated with the K AI models includes input data and label data of the K AI models.

In a possible implementation of the first aspect, that the terminal device processes the K AI models in the second mode includes: The terminal device processes the K AI models in the second mode to obtain K updated AI models; and the terminal device sends indication information indicating the K updated AI models.

According to the foregoing technical solution, the second mode includes AI training. Correspondingly, the terminal device may process the K AI models in the second mode, to obtain the K updated AI models, and the terminal device may further send the indication information indicating the K updated AI models, so that a receiver of the indication information obtains the updated AI models. In this way, an AI model deployed in a communication network can be trained.

In a possible implementation of the first aspect, the method further includes: The terminal device receives indication information indicating the K AI models.

According to the foregoing technical solution, the terminal device may further receive the indication information indicating the K AI models, so that the terminal device determines the K AI models based on the indication information, to deploy an AI model in a communication network.

Optionally, the K AI models may be preconfigured or predefined.

In a possible implementation of the first aspect, the first indication information is one of N pieces of indication information, the N pieces of indication information respectively indicate processing modes of AI models corresponding to N AI tasks, the processing modes include the first mode or the second mode, the N AI tasks include the first AI task, and N is a positive integer.

According to the foregoing technical solution, the first indication information received by the terminal device may be one of the N pieces of indication information, and the N pieces of indication information may respectively indicate the processing modes of the AI models corresponding to the N AI tasks, so that the terminal device can determine the processing modes of the N AI tasks based on the N pieces of indication information. In this way, a processing mode of an AI model can be indicated at the granularity of an AI task.

In a possible implementation of the first aspect, the method further includes: The terminal device sends indication information indicating processing modes of AI models corresponding to M AI tasks, where M is a positive integer, the processing modes include the first mode or the second mode, and the M AI tasks include the first AI task.

Optionally, the indication information sent by the terminal device indicates the processing modes of the AI models corresponding to the M AI tasks, where the indication information may indicate the processing modes supported by the terminal device in the AI models corresponding to the M AI tasks. In other words, the indication information may be capability indication information.

According to the foregoing technical solution, the indication information sent by the terminal device is indication information indicating the processing modes of the AI models corresponding to the M AI tasks, and the M AI tasks include the first AI task, so that a receiver of the indication information can determine the first indication information based on the processing modes of the AI models corresponding to the M AI tasks, for the processing mode indicated by the first indication information to adapt to a capability of the terminal device.

A second aspect of this application provides a communication method. The method is performed by a network device, or the method is performed by some components (such as a processor, a chip, or a chip system) in a network device, or the method may be implemented by a logic module or software that can implement all or some functions of a network device. In the second aspect and a possible implementation thereof, an example in which the method is performed by a network device is used for description. For example, the network device may include an access network device and/or a core network device. In the method, the network device receives first indication information, where the first indication information indicates that processing modes of K artificial intelligence AI models are a first mode or a second mode, the K AI models correspond to a first AI task, and K is a positive integer; and the first mode includes AI inference, and the second mode includes AI training; and the network device sends the first indication information.

According to the foregoing technical solution, the first indication information received by the network device indicates that the processing modes of the K AI models are the first mode or the second mode. Then, the network device may send the first indication information. Subsequently, after a terminal device receives the first indication information, the terminal device may process the K AI models in the first mode or the second mode. The first mode includes AI inference, and the second mode includes AI training. Therefore, the terminal device, as a communication node in a communication system, can perform AI inference or AI training on the AI model based on the first indication information, and can indicate the two modes: the AI inference mode and the AI training mode in a communication network, so that computing power of the communication node can be applied to AI task processing.

It should be noted that the network device may include an access network device and/or a core network device. The following provides some implementation examples for description.

In an implementation example, the network device may be an access network device. In the foregoing technical solution, the first indication information received by the access network device may be from a core network device. Correspondingly, the access network device may send the first indication information to the terminal device. In other words, a communication interface through which the network device receives the first indication information may be a communication interface between the access network device and the core network device, that is, a first device sends the first indication information to the access network device through the core network device. A communication interface through which the network device sends the first indication information may be a communication interface between the access network device and the terminal device, that is, the access network device sends the first indication information to the terminal device.

In another implementation example, the network device may be a core network device. In the foregoing technical solution, the first indication information received by the core network device may be from a first device (for example, the first device may be a server, a virtual machine, or a container). Correspondingly, the core network device may send the first indication information to an access network device, and then the access network device can further send the first indication information to the terminal device. In other words, a communication interface through which the network device receives the first indication information may be a communication interface between the core network device and the first device, that is, the first device sends the first indication information to the core network device. A communication interface through which the network device sends the first indication information may be a communication interface between the core network device and the access network device, that is, the core network device sends the first indication information to the terminal device through the access network device.

In another implementation example, the network device may include an access network device and a core network device, that is, the access network device and the core network device are integrated into a same device. In the foregoing technical solution, the first indication information received by the network device may be from a first device (for example, the first device may be a server, a virtual machine, or a container). Correspondingly, the network device may send the first indication information to the terminal device. In other words, a communication interface through which the network device receives the first indication information may be a communication interface between the network device and the first device, that is, the first device sends the first indication information to the network device. A communication interface through which the network device sends the first indication information may be a communication interface between the network device and the terminal device, that is, the network device sends the first indication information to the terminal device.

In a possible implementation of the second aspect, the method further includes: The network device receives first configuration information, where the first configuration information is for configuring management information of AI models corresponding to X AI tasks, the X AI tasks include the first AI task, and X is a positive integer; and the network device sends, based on the first configuration information, indication information indicating management information of the K AI models.

According to the foregoing technical solution, the network device may further receive the first configuration information, and the network device may further send, based on the first configuration information, the indication information indicating the management information of the K AI models. Then, after receiving the indication information, the terminal device can manage the K AI models based on the indication information. Therefore, an AI model can be managed in a communication network based on the indication information.

Optionally, the network device that determines the management information based on the first configuration information may be a core network device, or may be an access network device, or may be a device into which a core network device and an access network device are integrated. This is not limited herein.

Optionally, the first configuration information includes one or more of the following: an application scenario of the AI models corresponding to the X AI tasks, a selection condition of the AI models corresponding to the X AI tasks, an enabling condition of the AI models corresponding to the X AI tasks, an update condition of the AI models corresponding to the X AI tasks, a switching condition of the AI models corresponding to the X AI tasks, a fallback condition of the AI models corresponding to the X AI tasks, and data collection information of the AI models corresponding to the X AI tasks.

Optionally, the data collection information of the AI models corresponding to the X AI tasks includes one or more of the following: a data type, collection time, collection frequency, a collection location, and a collection quantity.

In a possible implementation of the second aspect, the method further includes: The network device receives indication information indicating management information of the K AI models; and the network device sends the indication information indicating the management information of the K AI models.

According to the foregoing technical solution, the network device may receive and send the indication information indicating the management information of the K AI models, so that the network device, as a pass-through communication role, sends the indication information to the terminal device. Therefore, an AI model can be managed in a communication network based on the indication information.

Optionally, the device that determines the management information based on the first configuration information may be a core network device. Correspondingly, the core network device may send, to an access network device, the indication information indicating the management information of the K AI models. Subsequently, the access network device may perform pass-through processing on the indication information. In other words, the network device that serves as the pass-through communication role in the foregoing technical solution may be the access network device.

Optionally, the management information includes at least one of the following: model selection, model enabling, model update, model switching, and model fallback.

In a possible implementation of the second aspect, the method further includes: The network device receives indication information indicating model performance measurement results of the K AI models.

According to the foregoing technical solution, the network device may further receive the indication information indicating the model performance measurement results of the K AI models, to measure performance of an AI model deployed in a communication network.

In a possible implementation of the second aspect, before the network device receives the indication information indicating the model performance measurement results of the K AI models, the method further includes: The network device receives second configuration information, where the second configuration information is for configuring measurement information of AI models corresponding to Y AI tasks, and the Y AI tasks include the first AI task; and the network device sends, based on the second configuration information, indication information indicating to report the model performance measurement results of the K AI models.

According to the foregoing technical solution, the network device may further receive the second configuration information, and send, based on the second configuration information, the indication information indicating to report the model performance measurement results of the K AI models. Therefore, the terminal device can send the model performance measurement results of the K AI models based on the indication information, to indicate measurement on performance of an AI model deployed in a communication network.

Optionally, the network device that determines, based on the second configuration information, the indication information indicating to report the model performance measurement results of the K AI models may be a core network device, or may be an access network device, or may be a device into which a core network device and an access network device are integrated. This is not limited herein.

Optionally, the second configuration information includes one or more of the following: a measurement object, a measurement cycle, a measurement triggering condition, and a manner of reporting a measurement result.

In a possible implementation of the second aspect, before the network device receives the indication information indicating the model performance measurement results of the K AI models, the method further includes: The network device receives indication information indicating to report the model performance measurement results of the K AI models; and the network device sends the indication information indicating to report the model performance measurement results of the K AI models.

According to the foregoing technical solution, the network device may further receive and send the indication information indicating to report the model performance measurement results of the K AI models, so that the network device, as a pass-through communication role, sends the indication information to the terminal device, to indicate measurement on performance of an AI model deployed in a communication network.

Optionally, the device that determines, based on the second configuration information, the indication information indicating to report the model performance measurement results of the K AI models may be a core network device. Correspondingly, the core network device may send the indication information to an access network device. Subsequently, the access network device may perform pass-through processing on the indication information. In other words, the network device that serves as the pass-through communication role in the foregoing technical solution may be the access network device.

In a possible implementation of the second aspect, the method further includes: The network device receives data associated with the K AI models.

According to the foregoing technical solution, the network device may further receive the data associated with the K AI models, to collect data associated with an AI model deployed in a communication network.

In a possible implementation of the second aspect, the method further includes: The network device sends first data, where the first data is obtained by performing processing based on the data associated with the K AI models.

Optionally, the first data is obtained by performing one or more processing such as data integration, preprocessing, and redundancy reduction based on the data associated with the K AI models.

According to the foregoing technical solution, after the network device receives the data associated with the K AI models, the network device may perform processing based on the data associated with the K AI models to obtain the first data, and send the first data, so that a receiver of the first data can obtain the first data.

Optionally, the network device that performs processing based on the data associated with the K AI models to obtain the first data may be a core network device, or may be an access network device, or may be a device into which a core network device and an access network device are integrated. This is not limited herein.

In a possible implementation of the second aspect, the method further includes: The network device sends the data associated with the K AI models.

According to the foregoing technical solution, after the network device receives the data associated with the K AI models, the network device, as a pass-through communication role, may send the data associated with the K AI models, so that a receiver of the data associated with the K AI models can further obtain other data (for example, the first data), to implement data collection.

Optionally, the network device that performs pass-through processing on the data associated with the K AI models may be an access network device. Subsequently, a core network device can obtain other data (for example, the first data) based on the data associated with the K AI models.

Optionally, in the first mode, the data associated with the K AI models includes input data of the K AI models; and/or in the second mode, the data associated with the K AI models includes input data and label data of the K AI models.

In a possible implementation of the second aspect, the method further includes: The network device receives indication information indicating K updated AI models, where the K updated AI models are obtained by processing the K AI models in the second mode.

According to the foregoing technical solution, the second mode includes AI training. Correspondingly, the terminal device may process the K AI models in the second mode, to obtain the K updated AI models, and the terminal device may further send the indication information indicating the K updated AI models, so that the network device obtains the updated AI models. In this way, an AI model deployed in a communication network can be trained.

In a possible implementation of the second aspect, the method further includes: The network device performs fusion on the K updated AI models to obtain a fusion result; and the network device sends indication information indicating the fusion result.

According to the foregoing technical solution, after the network device receives the indication information indicating the K updated AI models, the network device may further perform fusion on the K updated AI models to obtain the fusion result, and send the indication information indicating the fusion result, so that models are fused in an AI training scenario.

Optionally, the network device that performs fusion on the K updated AI models to obtain the fusion result may be a core network device, or may be an access network device, or may be a device into which a core network device and an access network device are integrated. This is not limited herein.

In a possible implementation of the second aspect, the method further includes: The network device sends indication information indicating the K updated AI models.

According to the foregoing technical solution, after the network device receives the indication information indicating the K updated AI models, the network device, as a pass-through communication role, may send the indication information indicating the K updated AI models, so that a receiver of the indication information can further implement model fusion.

Optionally, the network device that performs pass-through processing on the indication information indicating the K updated AI models may be an access network device. Subsequently, a core network device can perform model fusion based on the indication information.

In a possible implementation of the second aspect, the method further includes: The network device sends indication information indicating the K AI models.

According to the foregoing technical solution, the network device may further send, to the terminal device, the indication information indicating the K AI models, to deploy an AI model in a communication network.

Optionally, the K AI models may be preconfigured or predefined.

In a possible implementation of the second aspect, the method further includes: The network device receives third configuration information, where the third configuration information is for configuring P AI models, the P AI models correspond to the first AI task, and P is greater than or equal to K.

Optionally, the third configuration information includes at least one of the following: task type information of the first AI task, AI model type information of the P AI models, model scale information of the P AI models, and model performance requirement information of the P AI models.

According to the foregoing technical solution, after receiving the third configuration information for configuring the P AI models, the network device may send, to the terminal device, the indication information indicating the K AI models. To be specific, the network device may screen the P AI models and select the required K AI models, and then may deploy the K AI models to the terminal device.

Optionally, the network device that determines the K AI models based on the P AI models may be a core network device, or may be an access network device, or may be a device into which a core network device and an access network device are integrated. This is not limited herein.

In a possible implementation of the second aspect, the method further includes: The network device receives indication information indicating the K AI models.

According to the foregoing technical solution, the network device serves as a pass-through communication role, and the network device may send, to the terminal device, the indication information indicating the K AI models, to deploy an AI model in a communication network.

In a possible implementation of the second aspect, the first indication information is one of N pieces of indication information, the N pieces of indication information respectively indicate processing modes of AI models corresponding to N AI tasks, the processing modes include the first mode or the second mode, the N AI tasks include the first AI task, and N is a positive integer.

According to the foregoing technical solution, the first indication information sent by the network device may be one of the N pieces of indication information, and the N pieces of indication information may respectively indicate the processing modes of the AI models corresponding to the N AI tasks, so that the terminal device can determine the processing modes of the N AI tasks based on the N pieces of indication information. In this way, a processing mode of an AI model can be indicated at the granularity of an AI task.

In a possible implementation of the second aspect, the method further includes: The network device receives indication information indicating processing modes of AI models corresponding to M AI tasks, where M is a positive integer, the processing modes include the first mode or the second mode, and the M AI tasks include the first AI task.

Optionally, the indication information received by the network device indicates the processing modes of the AI models corresponding to the M AI tasks, where the indication information may indicate the processing modes supported by the terminal device in the AI models corresponding to the M AI tasks. In other words, the indication information may be capability indication information.

According to the foregoing technical solution, the indication information received by the network device is indication information indicating the processing modes of the AI models corresponding to the M AI tasks, and the M AI tasks include the first AI task, so that the network device can determine the first indication information based on the processing modes of the AI models corresponding to the M AI tasks, for the processing mode indicated by the first indication information to adapt to a capability of the terminal device.

In a possible implementation of the second aspect, the method further includes: The network device sends the indication information indicating the processing modes of the AI models corresponding to the M AI tasks.

According to the foregoing technical solution, after the network device receives the indication information indicating the processing modes of the AI models corresponding to the M AI tasks, the network device, as a pass-through forwarding communication role, may further send the indication information, to transmit capability information of the terminal device.

A third aspect of this application provides a communication method. The method is performed by a first device, or the method is performed by some components (such as a processor, a chip, or a chip system) in a first device, or the method may be implemented by a logic module or software that can implement all or some functions of a first device. In the third aspect and a possible implementation thereof, an example in which the method is performed by a first device is used for description. For example, the first device may be a device that provides an application service (for example, the device is an over the top (over the top, OTT) vendor device), including a server, a virtual machine, a container, and the like. In the method, the first device determines first indication information, where the first indication information indicates that processing modes of K artificial intelligence AI models are a first mode or a second mode, the K AI models correspond to a first AI task, and K is a positive integer; and the first mode includes AI inference, and the second mode includes AI training; and the first device sends the first indication information.

According to the foregoing technical solution, the first indication information sent by the first device indicates that the processing modes of the K AI models are the first mode or the second mode. Subsequently, after a terminal device receives the first indication information, the terminal device may process the K AI models in the first mode or the second mode. The first mode includes AI inference, and the second mode includes AI training. Therefore, the terminal device, as a communication node in a communication system, can perform AI inference or AI training on the AI model based on the first indication information, and can indicate the two modes: the AI inference mode and the AI training mode in a communication network, so that computing power of the communication node can be applied to AI task processing.

It should be noted that the first device may send the first indication information to a network device, and the network device may include a core network device and/or an access network device.

In a possible implementation of the third aspect, the method further includes: The first device sends first configuration information, where the first configuration information is for configuring management information of AI models corresponding to X AI tasks, the X AI tasks include the first AI task, and X is a positive integer.

According to the foregoing technical solution, the first device may further send the first configuration information for configuring the management information of the AI models corresponding to the X AI tasks, so that the network device may subsequently send, based on the first configuration information, indication information indicating management information of the K AI models. Then, after receiving the indication information, the terminal device can manage the K AI models based on the indication information. Therefore, an AI model can be managed in a communication network based on the indication information.

Optionally, the first configuration information includes one or more of the following: an application scenario of the AI models corresponding to the X AI tasks, a selection condition of the AI models corresponding to the X AI tasks, an enabling condition of the AI models corresponding to the X AI tasks, an update condition of the AI models corresponding to the X AI tasks, a switching condition of the AI models corresponding to the X AI tasks, a fallback condition of the AI models corresponding to the X AI tasks, and data collection information of the AI models corresponding to the X AI tasks.

Optionally, the data collection information of the AI models corresponding to the X AI tasks includes one or more of the following: a data type, collection time, collection frequency, a collection location, and a collection quantity.

Optionally, the first configuration information is for determining management information of the K AI models, and the management information includes at least one of the following: model selection, model enabling, model update, model switching, and model fallback.

In a possible implementation of the third aspect, the method further includes: The first device receives indication information indicating model performance measurement results of the K AI models.

According to the foregoing technical solution, the first device may further receive the indication information indicating the model performance measurement results of the K AI models, to measure performance of an AI model deployed in a communication network.

In a possible implementation of the third aspect, before the first device receives the indication information indicating the model performance measurement results of the K AI models, the method further includes: The first device sends second configuration information, where the second configuration information is for configuring measurement information of AI models corresponding to Y AI tasks, and the Y AI tasks include the first AI task.

According to the foregoing technical solution, the first device may further send the second configuration information, so that after the network device receives the second configuration information, the network device can send, based on the second configuration information, indication information indicating to report the model performance measurement results of the K AI models. Therefore, the terminal device can send the model performance measurement results of the K AI models based on the indication information, to indicate measurement on performance of an AI model deployed in a communication network.

Optionally, the second configuration information includes one or more of the following: a measurement object, a measurement cycle, a measurement triggering condition, and a manner of reporting a measurement result.

In a possible implementation of the third aspect, the method further includes: The first device receives data associated with the K AI models or first data, where the first data is obtained by performing processing based on the data associated with the K AI models.

According to the foregoing technical solution, the first device may further receive the data associated with the K AI models, to collect data associated with an AI model deployed in a communication network.

Optionally, in the first mode, the data associated with the K AI models includes input data of the K AI models; and/or in the second mode, the data associated with the K AI models includes input data and label data of the K AI models.

In a possible implementation of the third aspect, the method further includes: The first device receives indication information indicating K updated AI models, where the K updated AI models are obtained by processing the K AI models in the second mode; or the first device receives indication information indicating a fusion result, where the fusion result is obtained by performing fusion based on the K updated AI models.

According to the foregoing technical solution, the second mode includes AI training. Correspondingly, the terminal device may process the K AI models in the second mode, to obtain the K updated AI models, and the terminal device may further send the indication information indicating the K updated AI models, so that the first device obtains the updated AI models. In this way, an AI model deployed in a communication network can be trained.

In a possible implementation of the third aspect, the method further includes: The first device sends third configuration information, where the third configuration information is for configuring P AI models, the P AI models correspond to the first AI task, and P is greater than or equal to K.

Optionally, the third configuration information includes at least one of the following: task type information of the first AI task, AI model type information of the P AI models, model scale information of the P AI models, and model performance requirement information of the P AI models.

According to the foregoing technical solution, the first device may send the third configuration information for configuring the P AI models, so that the network device may send, to the terminal device based on the P AI models, indication information indicating the K AI models. To be specific, the network device may screen the P AI models and select the required K AI models, and then may deploy the K AI models to the terminal device.

In a possible implementation of the third aspect, the first indication information is one of N pieces of indication information, the N pieces of indication information respectively indicate processing modes of AI models corresponding to N AI tasks, the processing modes include the first mode or the second mode, the N AI tasks include the first AI task, and N is a positive integer.

According to the foregoing technical solution, the first indication information sent by the first device may be one of the N pieces of indication information, and the N pieces of indication information may respectively indicate the processing modes of the AI models corresponding to the N AI tasks, so that the terminal device can determine the processing modes of the N AI tasks based on the N pieces of indication information. In this way, a processing mode of an AI model can be indicated at the granularity of an AI task.

In a possible implementation of the third aspect, the method further includes: The first device receives indication information indicating processing modes of AI models corresponding to M AI tasks, where M is a positive integer, the processing modes include the first mode or the second mode, and the M AI tasks include the first AI task.

According to the foregoing technical solution, the indication information received by the first device is indication information indicating the processing modes of the AI models corresponding to the M AI tasks, and the M AI tasks include the first AI task, so that the first device can determine the first indication information based on the processing modes of the AI models corresponding to the M AI tasks, for the processing mode indicated by the first indication information to adapt to a capability of the terminal device.

A fourth aspect of this application provides a communication apparatus. The apparatus is a terminal device, or the apparatus is some components (such as a processor, a chip, or a chip system) in a terminal device, or the apparatus may be a logic module or software that can implement all or some functions of a terminal device. In the fourth aspect and a possible implementation thereof, an example in which the communication apparatus is implemented by a terminal device is used for description.

The apparatus includes a processing unit and a transceiver unit. The transceiver unit is configured to receive first indication information, where the first indication information indicates that processing modes of K artificial intelligence AI models are a first mode or a second mode, the K AI models correspond to a first AI task, and K is a positive integer; and the first mode includes AI inference, and the second mode includes AI training. The processing unit is configured to process the K AI models in the first mode or the second mode.

In a possible implementation of the fourth aspect, the transceiver unit is further configured to receive indication information indicating management information of the K AI models.

In a possible implementation of the fourth aspect, the management information includes at least one of the following: model selection, model enabling, model update, model switching, and model fallback.

In a possible implementation of the fourth aspect, the transceiver unit is further configured to send model performance measurement results of the K AI models.

In a possible implementation of the fourth aspect, the transceiver unit is further configured to receive indication information indicating to report the model performance measurement results of the K AI models.

In a possible implementation of the fourth aspect, the transceiver unit is further configured to send data associated with the K AI models.

In a possible implementation of the fourth aspect, in the first mode, the data associated with the K AI models includes input data of the K AI models; and/or in the second mode, the data associated with the K AI models includes input data and label data of the K AI models.

In a possible implementation of the fourth aspect, that the processing unit is configured to process the K AI models in the second mode includes: processing the K AI models in the second mode to obtain K updated AI models; and sending indication information indicating the K updated AI models.

In a possible implementation of the fourth aspect, the transceiver unit is further configured to receive indication information indicating the K AI models.

In a possible implementation of the fourth aspect, the first indication information is one of N pieces of indication information, the N pieces of indication information respectively indicate processing modes of AI models corresponding to N AI tasks, the processing modes include the first mode or the second mode, the N AI tasks include the first AI task, and N is a positive integer.

In a possible implementation of the fourth aspect, the transceiver unit is further configured to send indication information indicating processing modes of AI models corresponding to M AI tasks, where M is a positive integer, the processing modes include the first mode or the second mode, and the M AI tasks include the first AI task.

A fifth aspect of this application provides a communication apparatus. The apparatus is a network device, or the apparatus is some components (such as a processor, a chip, or a chip system) in a network device, or the apparatus may be a logic module or software that can implement all or some functions of a network device. In the fifth aspect and a possible implementation thereof, an example in which the communication apparatus is implemented by a network device is used for description.

The apparatus includes a transceiver unit. The transceiver unit is configured to receive first indication information, where the first indication information indicates that processing modes of K artificial intelligence AI models are a first mode or a second mode, the K AI models correspond to a first AI task, and K is a positive integer; and the first mode includes AI inference, and the second mode includes AI training. The transceiver unit is further configured to send the first indication information.

In a possible implementation of the fifth aspect, the transceiver unit is further configured to receive first configuration information, where the first configuration information is for configuring management information of AI models corresponding to X AI tasks, the X AI tasks include the first AI task, and X is a positive integer; and the transceiver unit is further configured to send, based on the first configuration information, indication information indicating management information of the K AI models.

In a possible implementation of the fifth aspect, the first configuration information includes one or more of the following: an application scenario of the AI models corresponding to the X AI tasks, a selection condition of the AI models corresponding to the X AI tasks, an enabling condition of the AI models corresponding to the X AI tasks, an update condition of the AI models corresponding to the X AI tasks, a switching condition of the AI models corresponding to the X AI tasks, a fallback condition of the AI models corresponding to the X AI tasks, and data collection information of the AI models corresponding to the X AI tasks.

In a possible implementation of the fifth aspect, the data collection information of the AI models corresponding to the X AI tasks includes one or more of the following: a data type, collection time, collection frequency, a collection location, and a collection quantity.

In a possible implementation of the fifth aspect, the transceiver unit is further configured to receive indication information indicating management information of the K AI models; and the transceiver unit is further configured to send the indication information indicating the management information of the K AI models.

In a possible implementation of the fifth aspect, the management information includes at least one of the following: model selection, model enabling, model update, model switching, and model fallback.

In a possible implementation of the fifth aspect, the transceiver unit is further configured to receive indication information indicating model performance measurement results of the K AI models.

In a possible implementation of the fifth aspect, the transceiver unit is further configured to receive second configuration information, where the second configuration information is for configuring measurement information of AI models corresponding to Y AI tasks, and the Y AI tasks include the first AI task; and the transceiver unit is further configured to send, based on the second configuration information, indication information indicating to report the model performance measurement results of the K AI models.

In a possible implementation of the fifth aspect, the second configuration information includes one or more of the following: a measurement object, a measurement cycle, a measurement triggering condition, and a manner of reporting a measurement result.

In a possible implementation of the fifth aspect, the transceiver unit is further configured to receive indication information indicating to report the model performance measurement results of the K AI models; and the transceiver unit is further configured to send the indication information indicating to report the model performance measurement results of the K AI models.

In a possible implementation of the fifth aspect, the transceiver unit is further configured to receive data associated with the K AI models.

In a possible implementation of the fifth aspect, the transceiver unit is further configured to send first data, where the first data is obtained by performing processing based on the data associated with the K AI models.

In a possible implementation of the fifth aspect, the transceiver unit is further configured to send data associated with the K AI models.

In a possible implementation of the fifth aspect, in the first mode, the data associated with the K AI models includes input data of the K AI models; and/or in the second mode, the data associated with the K AI models includes input data and label data of the K AI models.

In a possible implementation of the fifth aspect, the transceiver unit is further configured to receive indication information indicating K updated AI models, where the K updated AI models are obtained by processing the K AI models in the second mode.

In a possible implementation of the fifth aspect, the communication apparatus further includes a processing unit. The processing unit is configured to perform fusion on the K updated AI models to obtain a fusion result. The transceiver unit is further configured to send indication information indicating the fusion result.

In a possible implementation of the fifth aspect, the transceiver unit is further configured to send indication information indicating the K updated AI models.

In a possible implementation of the fifth aspect, the transceiver unit is further configured to send indication information indicating the K AI models.

In a possible implementation of the fifth aspect, the transceiver unit is further configured to receive third configuration information, where the third configuration information is for configuring P AI models, the P AI models correspond to the first AI task, and P is greater than or equal to K.

In a possible implementation of the fifth aspect, the transceiver unit is further configured to receive the indication information indicating the K AI models.

In a possible implementation of the fifth aspect, the first indication information is one of N pieces of indication information, the N pieces of indication information respectively indicate processing modes of AI models corresponding to N AI tasks, the processing modes include the first mode or the second mode, the N AI tasks include the first AI task, and N is a positive integer.

In a possible implementation of the fifth aspect, the transceiver unit is further configured to receive indication information indicating processing modes of AI models corresponding to M AI tasks, where M is a positive integer, the processing modes include the first mode or the second mode, and the M AI tasks include the first AI task.

In a possible implementation of the fifth aspect, the transceiver unit is further configured to send the indication information indicating the processing modes of the AI models corresponding to the M AI tasks.

A sixth aspect of this application provides a communication apparatus. The apparatus is a first device, or the apparatus is some components (such as a processor, a chip, or a chip system) in a first device, or the apparatus may be a logic module or software that can implement all or some functions of a first device. In the sixth aspect and a possible implementation thereof, an example in which the communication apparatus is a first device is used for description. The first device may be a terminal device or a network device.

The apparatus includes a processing unit and a transceiver unit. The processing unit is configured to determine first indication information, where the first indication information indicates that processing modes of K artificial intelligence AI models are a first mode or a second mode, the K AI models correspond to a first AI task, and K is a positive integer; and the first mode includes AI inference, and the second mode includes AI training. The transceiver unit is configured to send the first indication information.

In a possible implementation of the sixth aspect, the transceiver unit is further configured to send first configuration information, where the first configuration information is for configuring management information of AI models corresponding to X AI tasks, the X AI tasks include the first AI task, and X is a positive integer.

In a possible implementation of the sixth aspect, the first configuration information includes one or more of the following: an application scenario of the AI models corresponding to the X AI tasks, a selection condition of the AI models corresponding to the X AI tasks, an enabling condition of the AI models corresponding to the X AI tasks, an update condition of the AI models corresponding to the X AI tasks, a switching condition of the AI models corresponding to the X AI tasks, a fallback condition of the AI models corresponding to the X AI tasks, and data collection information of the AI models corresponding to the X AI tasks.

In a possible implementation of the sixth aspect, the data collection information of the AI models corresponding to the X AI tasks includes one or more of the following: a data type, collection time, collection frequency, a collection location, and a collection quantity.

In a possible implementation of the sixth aspect, the first configuration information is for determining management information of the K AI models, and the management information includes at least one of the following: model selection, model enabling, model update, model switching, and model fallback.

In a possible implementation of the sixth aspect, the transceiver unit is further configured to receive indication information indicating model performance measurement results of the K AI models.

In a possible implementation of the sixth aspect, the transceiver unit is further configured to send second configuration information, where the second configuration information is for configuring measurement information of AI models corresponding to Y AI tasks, and the Y AI tasks include the first AI task.

In a possible implementation of the sixth aspect, the second configuration information includes one or more of the following: a measurement object, a measurement cycle, a measurement triggering condition, and a manner of reporting a measurement result.

In a possible implementation of the sixth aspect, the transceiver unit is further configured to receive data associated with the K AI models or first data, where the first data is obtained by performing processing based on the data associated with the K AI models.

In a possible implementation of the sixth aspect, in the first mode, the data associated with the K AI models includes input data of the K AI models; and/or in the second mode, the data associated with the K AI models includes input data and label data of the K AI models.

In a possible implementation of the sixth aspect, the transceiver unit is further configured to receive indication information indicating K updated AI models, where the K updated AI models are obtained by processing the K AI models in the second mode; or the transceiver unit is further configured to receive indication information indicating a fusion result, where the fusion result is obtained by performing fusion based on the K updated AI models.

In a possible implementation of the sixth aspect, the transceiver unit is further configured to send third configuration information, where the third configuration information is for configuring P AI models, the P AI models correspond to the first AI task, and P is greater than or equal to K.

In a possible implementation of the sixth aspect, the first indication information is one of N pieces of indication information, the N pieces of indication information respectively indicate processing modes of AI models corresponding to N AI tasks, the processing modes include the first mode or the second mode, the N AI tasks include the first AI task, and N is a positive integer.

In a possible implementation of the sixth aspect, the transceiver unit is further configured to receive indication information indicating processing modes of AI models corresponding to M AI tasks, where M is a positive integer, the processing modes include the first mode or the second mode, and the M AI tasks include the first AI task.

A seventh aspect of embodiments of this application provides a communication apparatus, including at least one processor. The at least one processor is configured to execute a program or instructions in a memory, for the apparatus to implement the method according to the first aspect or any one of the possible implementations in the first aspect.

An eighth aspect of embodiments of this application provides a communication apparatus, including at least one processor. The at least one processor is configured to execute a program or instructions in a memory, for the apparatus to implement the method according to the second aspect or any one of the possible implementations in the second aspect.

A ninth aspect of embodiments of this application provides a communication apparatus, including at least one processor. The at least one processor is configured to execute a program or instructions in a memory, for the apparatus to implement the method according to the third aspect or any one of the possible implementations in the third aspect.

A tenth aspect of embodiments of this application provides a communication apparatus, including at least one logic circuit and an input/output interface. The logic circuit is configured to perform the method according to the first aspect or any one of the possible implementations in the first aspect.

An eleventh aspect of embodiments of this application provides a communication apparatus, including at least one logic circuit and an input/output interface. The logic circuit is configured to perform the method according to the second aspect or any one of the possible implementations in the second aspect.

A twelfth aspect of embodiments of this application provides a communication apparatus, including at least one logic circuit and an input/output interface. The logic circuit is configured to perform the method according to the third aspect or any one of the possible implementations in the third aspect.

The communication apparatus provided in the seventh aspect to the twelfth aspect may be a device (such as a terminal device, a network device, or a first device), or the communication apparatus may be some components (such as a processor, a chip, or a chip system) in a device (such as a terminal device, a network device, or a first device), or the communication apparatus may be a logic module or software that can implement all or some functions of a device (such as a terminal device, a network device, or a first device).

A thirteenth aspect of embodiments of this application provides a computer-readable storage medium. The storage medium is configured to store one or more computer-executable instructions. When the computer-executable instructions are executed by a processor, the processor performs the method according to any possible implementation in any one of the first aspect to the third aspect.

A fourteenth aspect of embodiments of this application provides a computer program product (also referred to as a computer program). When the computer program product is executed by a processor, the processor performs the method according to any possible implementation in any one of the first aspect to the third aspect.

A fifteenth aspect of embodiments of this application provides a chip system (or a chip). The chip system includes at least one processor configured to support a communication apparatus to implement a function in any one of the possible implementations in any one of the first aspect to the third aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A sixteenth aspect of embodiments of this application provides a communication system. The communication system includes the communication apparatus in the fourth aspect, the communication apparatus in the fifth aspect, and the communication apparatus in the sixth aspect; or the communication system includes the communication apparatus in the seventh aspect, the communication apparatus in the eighth aspect, and the communication apparatus in the ninth aspect; or the communication system includes the communication apparatus in the tenth aspect, the communication apparatus in the eleventh aspect, and the communication apparatus in the twelfth aspect.

For technical effects brought by any design in the fourth aspect to the sixteenth aspect, refer to the technical effects brought by different designs in the first aspect to the third aspect. Details are not described herein again.

### BRIEF DESCRIPTION OF DRAWINGS

FIG. 1a is a diagram of a communication system according to this application;
FIG. 1b is another diagram of a communication system according to this application;
FIG. 1c is another diagram of a communication system according to this application;
FIG. 2 is a diagram of interaction in a communication method according to this application;
FIG. 3 is another diagram of interaction in a communication method according to this application;
FIG. 4 is another diagram of interaction in a communication method according to this application;
FIG. 5 is another diagram of interaction in a communication method according to this application;
FIG. 6 is a diagram of an implementation of a communication method according to this application;
FIG. 7 is a diagram of another implementation of a communication method according to this application;
FIG. 8 is a diagram of a communication apparatus according to this application;
FIG. 9 is another diagram of a communication apparatus according to this application;
FIG. 10 is another diagram of a communication apparatus according to this application;
FIG. 11 is another diagram of a communication apparatus according to this application; and
FIG. 12 is another diagram of a communication apparatus according to this application.

### DESCRIPTION OF EMBODIMENTS

First, some terms in embodiments of this application are explained and described, to facilitate understanding of a person skilled in the art.
(1) A terminal device may be a wireless terminal device that can receive scheduling and indication information of a network device. The wireless terminal device may be a device that provides a user with voice and/or data connectivity, a handheld device with a wireless connection function, or another processing device connected to a wireless modem.

The terminal device may communicate with one or more core networks or the Internet via a radio access network (radio access network, RAN). The terminal device may be a mobile terminal device, such as a mobile phone (also referred to as a "cellular" phone or a mobile phone (mobile phone)), or a computer and a data card, for example, may be a portable, pocket-sized, handheld, computer-built-in, or on-board mobile apparatus that exchanges voice and/or data with the radio access network, such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer with a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, such as glasses, gloves, watches, clothes, and shoes. The wearable device is a portable device that can be directly worn on the body or integrated into clothes or an accessory of a user. The wearable device is a hardware device, and further implements a powerful function through software support, data exchange, and cloud interaction. In a broad sense, wearable intelligent devices include full-featured and large-sized devices that can implement all or some of functions without depending on smartphones, for example, smartwatches or smart glasses, and include devices that are dedicated to only one type of application functions and that need to collaboratively operate with other devices such as smartphones, for example, various smart bands, smart helmets, or smart jewelry for monitoring physical signs.

The terminal may alternatively be an unmanned aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may be a terminal device in an evolved communication system (for example, a 6th generation (6th generation, 6G) communication system) after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an unmanned aerial vehicle, and an Internet of Things (Internet of Things, IoT) device.

In an embodiment of this application, the terminal device may further obtain an AI service provided by a network device. Optionally, the terminal device may further have an AI processing capability.

(2) A network device may be a device in a wireless network. For example, the network device may be a RAN node (or device) connecting a terminal device to the wireless network, and may also be referred to as a base station. Currently, some examples of the RAN device are a base station (base station), an evolved NodeB (evolved NodeB, eNodeB), a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (such as home evolved NodeB or home NodeB, HNB), a baseband unit (baseband unit, BBU), or a wireless fidelity (wireless fidelity, Wi-Fi) access point AP. In addition, in a network structure, the network device may include a central unit (central unit, CU) node, a distributed unit (distributed unit, DU) node, or a RAN device including a CU node and a DU node.

Optionally, the RAN node may be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, an on-board device, or the like. For example, an access network device in a vehicle-to-everything (vehicle-to-everything, V2X) technology may be a roadside unit (roadside unit, RSU).

In another possible scenario, a plurality of RAN nodes cooperate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between an access network device and a terminal device complies with a specified protocol layer structure. The protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that can be implemented by the network elements, refer to Table 1.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function for the terminal device. A specific technique and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), or a public data network gateway (public data network gateway, PDN gateway, P-GW) in a 4th generation (4th generation, 4G) network; and an access and mobility management function (access and mobility management function, AMF), a user plane function (user plane function, UPF), or a session management function (session management function, SMF) in a 5G network. In addition, the core network device may further include another core network device in the 5G network and a next-generation network of the 5G network.

In an embodiment of this application, the network device may alternatively be a network node with an AI capability, and may provide an AI service for a terminal or another network device, for example, may be an AI node, a computing power node, a RAN node with an AI capability, or a core network element with an AI capability on a network side (an access network or a core network).

In an embodiment of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

(3) Configuration and preconfiguration: In this application, both the configuration and the preconfiguration are included. The configuration means that a network device/server sends configuration information of some parameters or values of parameters to a terminal via a message or signaling, for the terminal to determine, based on the values or the information, a communication parameter or a resource used during transmission. Similar to the configuration, the preconfiguration may include parameter information or parameter values negotiated between a network device/server and a terminal device in advance, or may include parameter information or parameter values specified by standard protocols for a base station/network device or a terminal device, or may include parameter information or parameter values pre-stored in a base station/server or a terminal device. This is not limited in this application.

Further, these values and parameters may be changed or updated.

(4) Terms "system" and "network" in embodiments of this application may be used interchangeably. "A plurality of" means two or more than two. "And/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between associated objects. "At least one of the following items (pieces)" or a similar expression thereof means any combination of these items, including a singular item (piece) or any combination of plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may also be understood as "outputting" of a chip interface, and "receiving" may also be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on information between a source end at which the information is sent and a destination end, but the destination end can understand valid information from the source end. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed. For example, specific information may be indicated with the help of an arrangement sequence of all pieces of information that is pre-agreed (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining to-be-indicated information.

In this application, unless otherwise specified, mutual reference may be made between same or similar parts of various embodiments. In various embodiments of this application and various methods/designs/implementations in embodiments, unless otherwise specified or logic conflicts occur, terms and/or descriptions between different embodiments and between the methods/designs/implementations in embodiments are consistent and may be mutually referenced, and technical features in different embodiments and the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

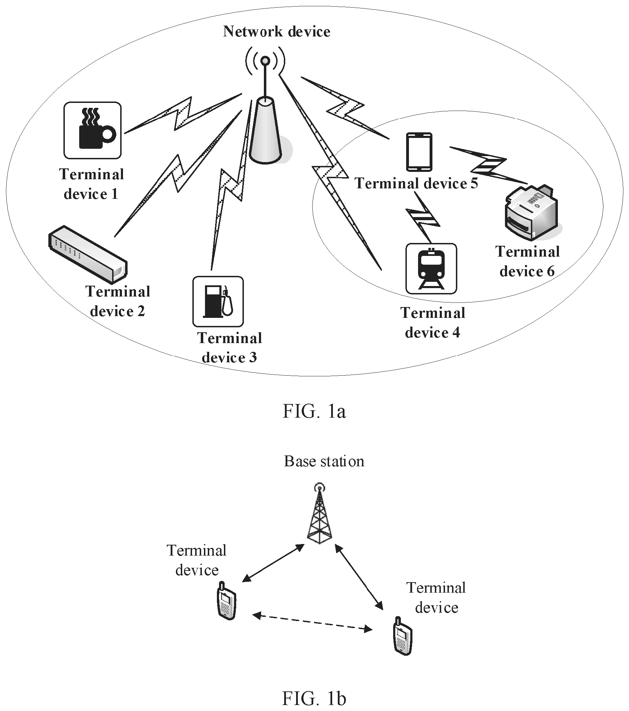

FIG. 1a is a diagram of a communication system according to this application. FIG. 1a shows an example of one network device and six terminal devices. The six terminal devices are a terminal device 1, a terminal device 2, a terminal device 3, a terminal device 4, a terminal device 5, and a terminal device 6. The example shown in FIG. 1a is described with the terminal device 1 as a smart teacup, the terminal device 2 as a smart air conditioner, the terminal device 3 as a smart fuel dispenser, the terminal device 4 as a transportation means, the terminal device 5 as a mobile phone, and the terminal device 6 as a printer.

As shown in FIG. 1a, an AI-related information (for example, first indication information or indication information indicating management information of K AI models mentioned below) sending entity may be the network device. An AI-related information receiving entity may be the terminal device 1 to the terminal device 6. In this case, the network device and the terminal device 1 to the terminal device 6 form a communication system. In the communication system, the terminal device 1 to the terminal device 6 may send AI-related data (for example, model performance measurement results of K AI models or data associated with K AI models mentioned below) to the network device, and the network device may receive the AI-related data sent by the terminal device 1 to the terminal device 6.

For example, in FIG. 1a, the terminal device 4 to the terminal device 6 may also form a communication system. The terminal device 5 serves as a network device, that is, an AI-related information sending entity. The terminal device 4 and the terminal device 6 serve as terminal devices, that is, AI-related information receiving entities. For example, in a system of Internet of Vehicles, the terminal device 5 separately sends AI-related information to the terminal device 4 and the terminal device 6, and receives AI-related data sent by the terminal device 4 and the terminal device 6; and correspondingly, the terminal device 4 and the terminal device 6 receive the AI-related information sent by the terminal device 5, and send the AI-related data to the terminal device 5.

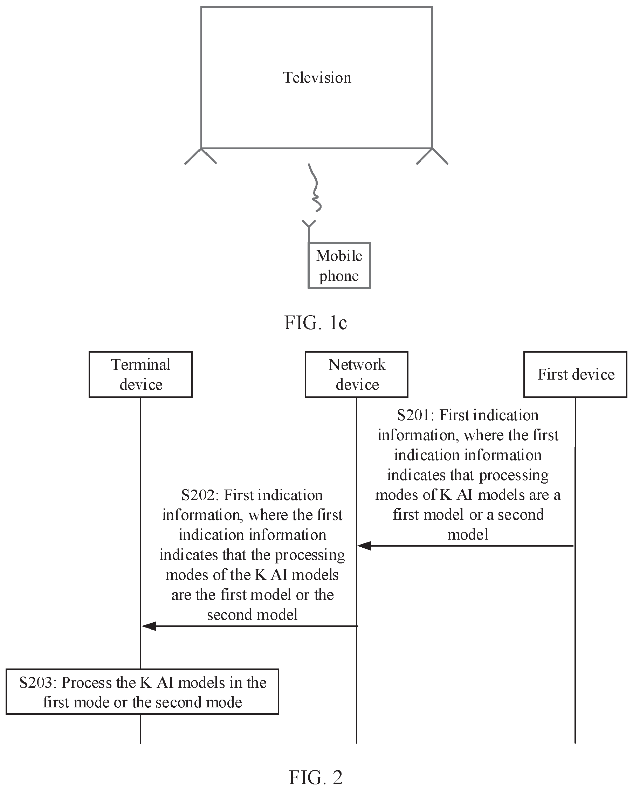

The communication system shown in FIG. 1a is used as an example. In addition to a communication-related service, an AI-related service may be performed between different devices (between network devices, between a network device and a terminal device, and/or between terminal devices). For example, as shown in FIG. 1b, an example in which a network device is a base station is used. A communication-related service and an AI-related service may be performed between the base station and one or more terminal devices, and the communication-related service and the AI-related service may also be performed between different terminal devices. In another example, as shown in FIG. 1c, an example in which terminal devices include a television and a mobile phone is used. A communication-related service and an AI-related service may also be performed between the television and the mobile phone.

The technical solutions provided in this application may be applied to a wireless communication system (for example, the system shown in FIG. 1a, FIG. 1b, or FIG. 1c). For example, an AI network element may be introduced to the communication system provided in this application to implement some or all AI-related operations. The AI network element may also be referred to as an AI node, an AI device, an AI entity, an AI module, an AI model, an AI unit, or the like. The AI network element may be built in a network element in a communication system. For example, the AI network element may be an AI module built in an access network device, a core network device, a cloud server, or operation, administration and maintenance (operation, administration and maintenance, OAM), to implement an AI-related function. The OAM may be used for a core network device and/or for an access network device. Alternatively, the AI network element may be an independently configured network element in the communication system. Optionally, a terminal or a chip built in the terminal may also include an AI entity configured to implement an AI-related function.

Currently, in a wireless communication system (for example, the communication system shown in FIG. 1a, FIG. 1b, or FIG. 1c), a communication node usually has a signal sending and receiving capability and a computing capability. A network device with a computing capability is used as an example. The computing capability of the network device is mainly for providing support for a signal sending and receiving capability with computing power (for example, computation on a time-domain resource, a frequency-domain resource, and the like that carry signals), to implement a communication task between the network device and another communication node.

However, in a communication network, in addition to providing support for the foregoing communication task with computing power, the computing capability of the communication node may still be underutilized. Therefore, how to use the computing capability is a technical problem to be urgently resolved.

As an implementation example, to cope with the future vision of proliferation of intelligence, intelligence may further evolve at a wireless network architecture level. In a future communication system, AI may be further integrated deeply with a wireless network, to implement network-native intelligence and terminal intelligence. For example, the integration of AI and a wireless network may be applied to the following new requirements and new scenarios. For example, terminal connections are more flexible and intelligent, including but not limited to diversified terminal types, super Internet of Things (Super IoT) (for example, Super IoT may include Internet of Things, Internet of Vehicles, industry, healthcare, and the like), and massive connections. Terminal connections are more flexible, and terminals have specific AI capabilities. In another example, the network-native intelligence means that, in addition to providing a conventional communication connection service, a network further provides computing and AI services to better support inclusive, real-time, and highly secure AI services. These new requirements and new scenarios bring changes in a wireless network architecture and a communication mode.

For example, for a 5G communication network, a network data analytics function (network data analytics function, NWDAF) may be added to introduce an AI capability into the communication network. Primary functions of the NWDAF include: supporting collection of data from another network function (network function, NF) and application function (application function, AF), supporting collection of data from an operation, administration, and maintenance (operation, administration, and maintenance, OAM) system, and providing a metadata open service, a data analysis service, and the like for an NF/AF. The NWDAF is introduced primarily to achieve automatic and intelligent network operation and maintenance, optimization of network performance and service experience, end-to-end assurance, and the like. An AI model trained by the NWDAF may be applied to network fields such as mobility management, session management, and network automation, and an AI method is applied to replace a numerical formula-based method in an original network function. However, the NWDAF is deployed in a core network as a new external AI unit, and is not designed to be strongly coupled to a communication network, resulting in limited performance.

To resolve the foregoing problem, this application provides a communication method and a related device, to indicate two modes: an AI inference (inference) mode and an AI training (training) mode in a communication network, so that computing power of a communication node can be applied to AI task processing.

FIG. 2 is a diagram of an implementation of a communication method according to this application. The method includes the following steps.

It needs to be noted that, in FIG. 2, an example in which a terminal device, a network device, and a first device are used as execution bodies for the interaction example is used to illustrate the method. However, the execution bodies for the interaction example are not limited in this application. For example, in FIG. 2 and the corresponding implementation, an execution body for S201 is the first device. Alternatively, the execution body may be a chip, a chip system, or a processor that supports the first device to implement the method, or may be a logic module or software that can implement all or some functions of the terminal device. In FIG. 2 and the corresponding implementation, the network device in S201 and S202 may be replaced with a chip, a chip system, or a processor that supports the network device to implement the method, or may be replaced with a logic module or software that can implement all or some functions of the network device. In FIG. 2 and the corresponding implementation, the terminal device in S202 and S203 may be replaced with a chip, a chip system, or a processor that supports the terminal device to implement the method, or may be replaced with a logic module or software that can implement all or some functions of the terminal device.

S201: The first device sends first indication information, and correspondingly, the network device receives the first indication information. The first indication information indicates that processing modes of K AI models are a first mode or a second mode, the K AI models correspond to a first AI task, and K is a positive integer; and the first mode includes AI inference, and the second mode includes AI training.

It should be noted that the first device may be a device that provides an application service (for example, the device is an over the top (over the top, OTT) vendor device), including a server, a virtual machine, a container, and the like.

S202: The network device sends the first indication information, and correspondingly, the terminal device receives the first indication information.

It should be noted that the network device may include an access network device and/or a core network device. The following provides some implementation examples for description.

In an implementation example, the network device may be an access network device. In step S201, the first indication information received by the access network device may be from a core network device. Correspondingly, the access network device may send the first indication information to the terminal device. In other words, a communication interface through which the network device receives the first indication information may be a communication interface between the access network device and the core network device, that is, a first device sends the first indication information to the access network device through the core network device in step S201. A communication interface through which the network device sends the first indication information may be a communication interface between the access network device and the terminal device, that is, the access network device sends the first indication information to the terminal device in step S202.

In another implementation example, the network device may be a core network device. In the foregoing technical solution, the first indication information received by the core network device may be from a first device (for example, the first device may be a server, a virtual machine, or a container). Correspondingly, the core network device may send the first indication information to an access network device, and then the access network device can further send the first indication information to the terminal device. In other words, a communication interface through which the network device receives the first indication information may be a communication interface between the core network device and the first device, that is, the first device sends the first indication information to the core network device in step S201. A communication interface through which the network device sends the first indication information may be a communication interface between the core network device and the access network device, that is, the core network device sends the first indication information to the terminal device through the access network device in step S202.

In another implementation example, the network device may include an access network device and a core network device, that is, the access network device and the core network device are integrated into a same device. In the foregoing technical solution, the first indication information received by the network device may be from a first device (for example, the first device may be a server, a virtual machine, or a container). Correspondingly, the network device may send the first indication information to the terminal device. In other words, a communication interface through which the network device receives the first indication information may be a communication interface between the network device and the first device, that is, the first device sends the first indication information to the network device in step S201. A communication interface through which the network device sends the first indication information may be a communication interface between the network device and the terminal device, that is, the network device sends the first indication information to the terminal device in step S202.

It may be understood that the first indication information may be carried by different messages on different communication interfaces.

For example, in step S201, if the first indication information is sent by the first device to a core network device, the first indication information is transmitted through a communication interface between the first device and the core network device (for example, an N6 interface between a data center and a user plane function (user plane function, UPF) in a core network element).

In another example, in step S201, if the first indication information is sent by the first device to an access network device, the first indication information is transmitted through a communication interface between the first device and the access network device (for example, an N6 interface between a data center and a UPF in a core network element, and an N3 interface between a UPF in a core network element and the access network device).

For example, in step S202, if the first indication information is sent by the network device to an access network device, the first indication information is transmitted through a communication interface (for example, an NG interface) between a core network device and the access network device.

In another example, in step S202, if an interface through which the network device sends the first indication information is a communication interface between an access network device and the terminal device, the first indication information may be carried in an RRC message or a system information block (system information block, SIB).

S203: The terminal device processes the K AI models in the first mode or the second mode.

It should be understood that one AI task corresponds to one or more AI models. It may be understood that an execution process of one AI task includes processing on the one or more AI models by an AI node. The AI node may include the terminal device. Optionally, the AI node may further include another device, for example, a network device or a first device.

It should be understood that, in the foregoing technical solution, the first AI task may correspond to P AI models, and K is less than or equal to P. In other words, in step S203, the K AI models processed by the terminal device may be some of one or more AI models corresponding to the first AI task, or the K AI models processed by the terminal device may be all of one or more AI models corresponding to the first AI task. The K AI models correspond to the first AI task, and may be indicated by an identifier of the first AI task and identifiers of the K AI models.

Optionally, in the foregoing technical solution, the K AI models indicated by the first indication information correspond to a same AI task (that is, the first AI task). In other words, an indication that is of the processing mode of the AI model and that is received by the terminal device may be implemented at the granularity of an AI task. To be specific, one or more AI models included in the same AI task may be indicated based on the first indication information, to reduce overheads and improve efficiency. However, during actual application, the K AI models indicated by the first indication information may be decoupled from the AI task. In other words, an indication that is of the processing mode of the AI model and that is received by the terminal device may be implemented at the granularity of an AI model, to improve flexibility of solution implementation. Similarly, other information/data (such as management information, indication information indicating an AI model, data associated with an AI model, and indication information indicating a supported processing mode) mentioned below may be indicated at the granularity of an AI task, or may be indicated at the granularity of an AI model.

It should be understood that the first mode includes AI inference. It may be understood that, in the first mode, an AI node performs at least AI inference on an AI model. That the AI node (such as the terminal device, and a network device or a first device that may participate in an AI task) performs AI inference on the AI model may include a process in which a communication apparatus inputs input data to the AI model, and obtains output data corresponding to the input data through inference of the AI model. Similarly, the second mode includes AI training. It may be understood that, in the second mode, an AI node performs at least AI training on an AI model. That the AI node (such as the terminal device, and a network device or a first device that may participate in an AI task) performs AI training on the AI model may include a process in which the communication apparatus inputs input data and label data to the AI model to update a parameter of the AI model.

In this application, the AI model may be replaced with a learning model, an AI learning model, a machine learning model, a neural network, an AI network, or the like.

In a possible implementation, the first indication information sent by the network device in step S202 is one of N pieces of indication information, the N pieces of indication information respectively indicate processing modes of AI models corresponding to N AI tasks, the processing modes include the first mode or the second mode, the N AI tasks include the first AI task, and N is a positive integer. Specifically, the first indication information sent by the network device may be one of the N pieces of indication information, and the N pieces of indication information may respectively indicate the processing modes of the AI models corresponding to the N AI tasks, so that the terminal device can determine the processing modes of the N AI tasks based on the N pieces of indication information. In this way, a processing mode of an AI model can be indicated at the granularity of an AI task.

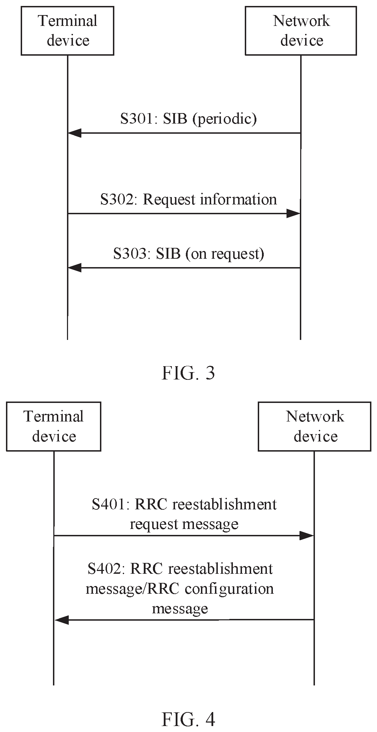

In an implementation example, the N pieces of indication information may be carried in system information (system information block, SIB) sent by the network device to the terminal device. The following provides description with reference to an implementation example shown in FIG. 3. For example, in step S301 shown in FIG. 3, the network device may send N pieces of indication information to the terminal device by using a periodic SIB (denoted as SIB (periodic) in the figure). In another example, in step S302 and step S303 shown in FIG. 3, the network device can receive request information (the request information is for requesting N pieces of configuration information) from the terminal device, and send an on request (on request) SIB based on the request information. Therefore, the N pieces of indication information are sent by using the SIB, so that one or more terminal devices can obtain the N pieces of indication information by using the SIB, thereby reducing overheads.

In another implementation example, the N pieces of indication information may be carried in a radio resource control (radio resource control, RRC) message sent by the network device to the terminal device. The following provides description with reference to an implementation example shown in FIG. 4. For example, the terminal device may send an RRC reestablishment request (RRCReEstablishmentRequest) message (the message is for requesting N pieces of indication information) in step S401. Then, the network device may send, based on the RRCReEstablishmentRequest message in step S402, an RRC reestablishment message (RRCReEstablishment) or an RRC configuration (RRCSetup) message that carries the N pieces of indication information. Therefore, the N pieces of indication information are sent by using the RRC message, so that the terminal device can obtain the N pieces of indication information based on an RRC connection to the network device, to provide a more flexible implementation.

For example, one or more AI task information (AITaskInfo) information elements (information element, IE) may be added to the SIB sent by the network device in step S301 or step S303 (or the RRC message sent by the network device in step S402). The one or more AITaskInfo information elements are respectively used to carry the N pieces of indication information. Optionally, the one or more AITaskInfo information elements may be included in an AI task information list (AITaskInfoList) information element. The following describes the information elements by using an example with reference to some information element formats.

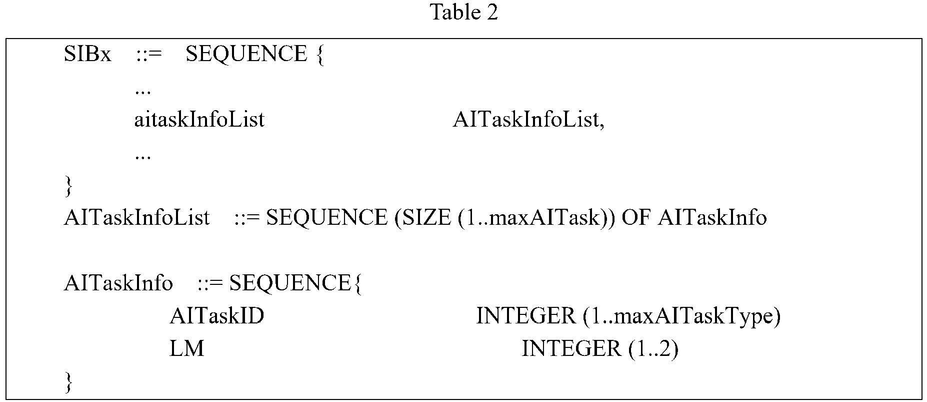

It should be understood that, in Table 2, an example in which the SIB is denoted as SIBx (a value of x is a positive integer, such as 1, 2, 3, ..., 16, 17, or 18) is used. As shown in Table 2, the SIB may carry an AITaskInfoList information element for carrying a list in which the N pieces of indication information are located. In addition, the AITaskInfoList information element may carry one or more AITaskInfo information elements for respectively carrying the N pieces of indication information. Moreover, each AITaskInfo information element may carry one piece of indication information (for example, the first indication information) in the N pieces of indication information. The one piece of indication information may carry an AI task identifier (AITaskID) information element and a learn mode (learn mode, LM) information element, to indicate an AI training mode or an AI inference mode. For example, a value 1 of the LM information element indicates the AI training mode, and a value 2 of the LM information element indicates the AI inference mode. Alternatively, a value 2 of the LM information element indicates the AI training mode, and a value 1 of the LM information element indicates the AI inference mode.

In addition, in Table 2, in the "aitaskInfoList AITaskInfoList" information element, the "aitaskInfoList" information element indicates that a name of a signaling field is AI task information list (that is, an instance of a class of the signaling field is an AI task information list), and the "AITaskInfoList" information element indicates that a class of a signaling field is an AI task information list (that is, the class of the signaling field is the AI task information list).

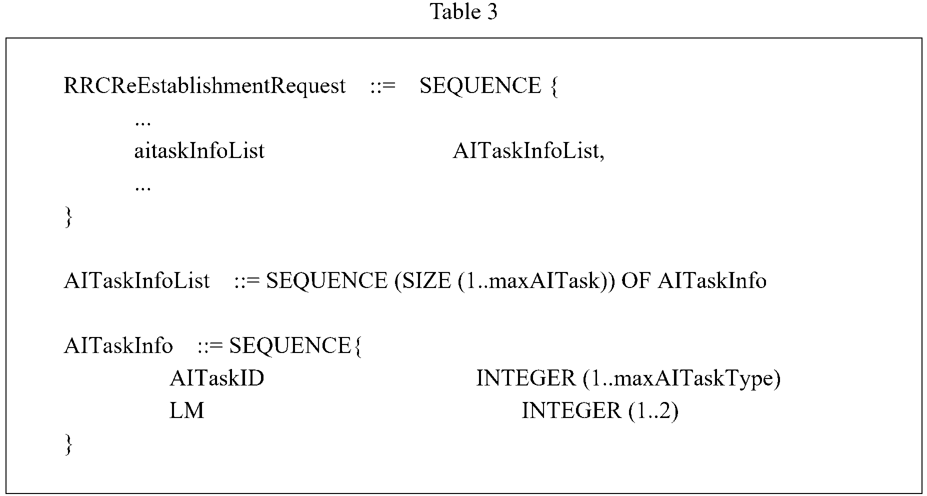

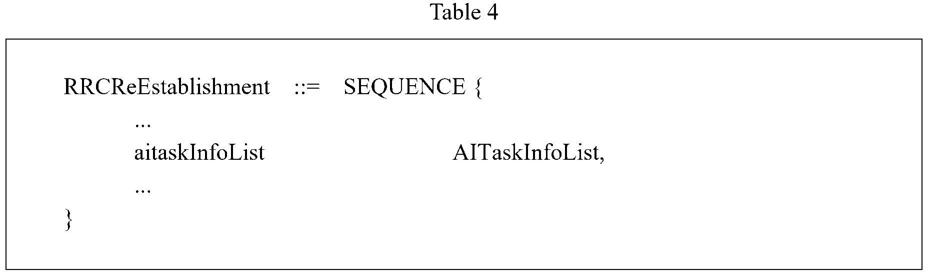

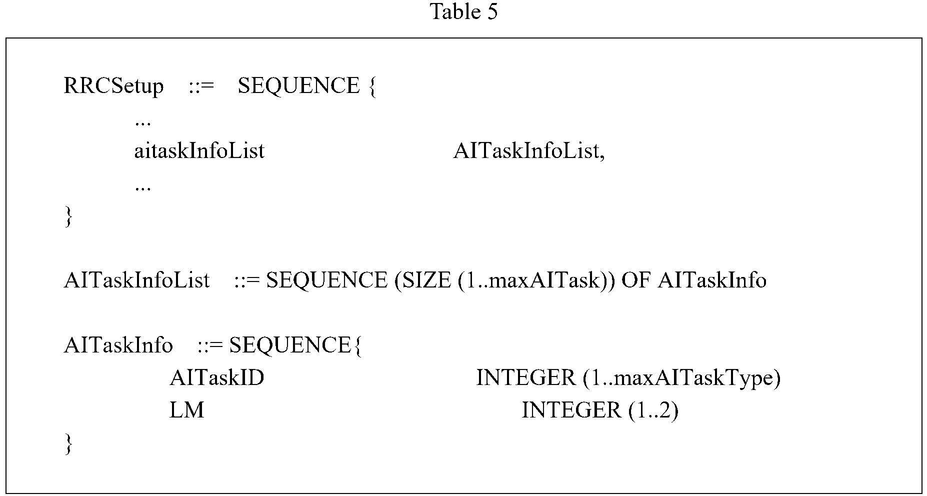

As shown in Table 3, the RRCReEstablishmentRequest message sent by the terminal device may be for requesting a learn mode of one or more AI tasks. Subsequently, the network device may send the N pieces of indication information to the terminal device by using the RRCReEstablishment message shown in Table 4 or the RRCSetup message shown in Table 5. Similarly, for implementation of each information element in the RRCReEstablishmentRequest message shown in Table 3, the RRCReEstablishment message shown in Table 4, and the RRCSetup message shown in Table 5, refer to the definitions of the information elements in Table 2.

In a possible implementation, in the method shown in FIG. 2, the method further includes: The network device receives indication information indicating processing modes of AI models corresponding to M AI tasks, where M is a positive integer, the processing modes include the first mode or the second mode, and the M AI tasks include the first AI task. Specifically, the indication information received by the network device is indication information indicating the processing modes of the AI models corresponding to the M AI tasks, and the M AI tasks include the first AI task, so that the network device can determine the first indication information based on the processing modes of the AI models corresponding to the M AI tasks, for the processing mode indicated by the first indication information to adapt to a capability of the terminal device.

In a possible implementation, after the network device receives the indication information indicating the processing modes of the AI models corresponding to the M AI tasks, the method further includes: The network device sends the indication information indicating the processing modes of the AI models corresponding to the M AI tasks. Specifically, after the network device receives the indication information indicating the processing modes of the AI models corresponding to the M AI tasks, the network device, as a pass-through forwarding communication role, may further send the indication information (for example, the network device sends the indication information to the first device; or in another example, when the network device is an access network device, the access network device sends the indication information to a core network device or the first device), to transmit capability information of the terminal device. Subsequently, the first device may determine, based on the capability information of the terminal device, the processing modes of the K AI models in the first AI task executed by the terminal device, and trigger configuration and transmission of the first indication information.

Optionally, the indication information received by the network device indicates the processing modes of the AI models corresponding to the M AI tasks, where the indication information may indicate the processing modes supported by the terminal device in the AI models corresponding to the M AI tasks. In other words, the indication information may be capability indication information.

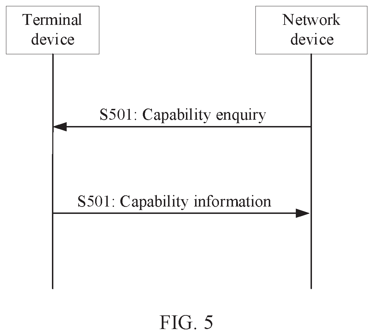

In an implementation example, the indication information that is sent by the terminal device and that indicates the processing modes of the AI models corresponding to the M AI tasks may be carried in capability information sent by the terminal device. The following provides description with reference to an implementation example shown in FIG. 5. As shown in FIG. 5, the network device may send a capability enquiry message in step S501, so that the terminal device may send, based on the capability enquiry message, capability information in step S502, and then the network device knows, based on the capability information, the processing modes of the AI models corresponding to the M AI tasks supported by the terminal device. For example, in step S501, the capability enquiry message may be a user equipment learn capability enquiry (UELearnCapabilityEnquiry) message. Correspondingly, in step S502, the capability information may be user equipment learn capability information (UELearnCapabilityInformation). For example, the UELearnCapabilityInformation sent by the terminal device may include information elements shown in Table 6.

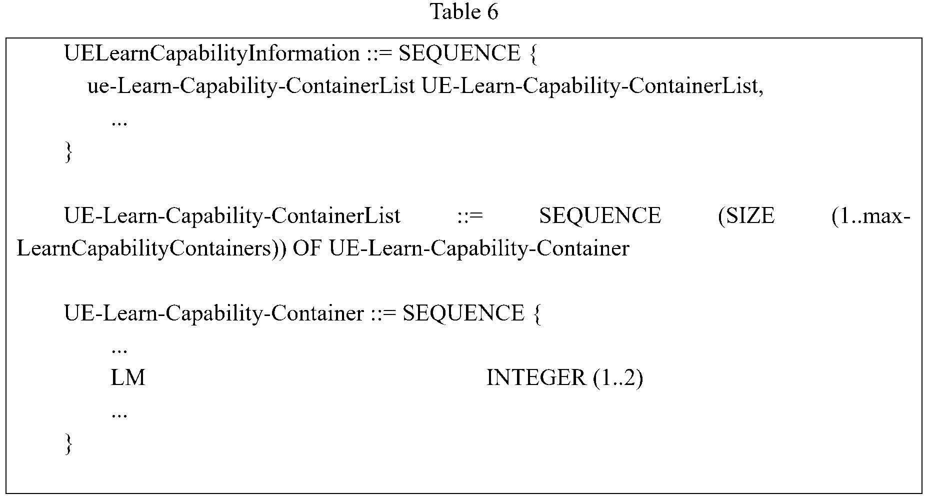

In Table 6, the UELearnCapabilityInformation may carry a user equipment learn capability container list (ue-Learn-Capability-ContainerList) information element, the information element may carry one or more user equipment learn capability container (UE-Learn-Capability-Container) information elements, and the one or more UE-Learn-Capability-Container information elements are respectively used to indicate the processing modes of the AI models corresponding to the M AI tasks. For example, each UE-Learn-Capability-Container information element may carry an LM information element for indicating that a processing mode of an AI model corresponding to one of the M AI tasks is an AI training mode or an AI inference mode.

In addition, in Table 6, in the "ue-Learn-Capability-ContainerList UE-Learn-Capability-ContainerList" information element, the "ue-Learn-Capability-ContainerList" information element indicates that a name of a signaling field is UE learn capability container list (that is, an instance of a class of the signaling field is a UE learn capability container list), and the "UE-Learn-Capability-ContainerList" information element indicates that a class of a signaling field is a UE learn capability container list (that is, the class of the signaling field is the UE learn capability container list).

Based on the technical solution shown in FIG. 2, the first indication information received by the terminal device in step S202 indicates that the processing modes of the K AI models are the first mode or the second mode. Then, the terminal device may process the K AI models in the first mode or the second mode in step S203 based on the first indication information. The first mode includes AI inference, and the second mode includes AI training. Therefore, the terminal device, as a communication node in a communication system, can perform AI inference or AI training on the AI model based on the first indication information, and can indicate the two modes: the AI inference mode and the AI training mode in a communication network, so that computing power of the communication node can be applied to AI task processing.

In a possible implementation, in the method shown in FIG. 2, the processing modes of the K AI models are indicated by the first indication information, and the AI models may be further managed based on management information. For example, the management information includes at least one of the following: model selection, model enabling, model update, model switching, and model fallback. The following describes an implementation process of the management information by using some implementation examples.

Implementation example A: The method shown in FIG. 2 further includes: The network device receives first configuration information, where the first configuration information is for configuring management information of AI models corresponding to X AI tasks, the X AI tasks include the first AI task, and X is a positive integer; and then the network device sends, based on the first configuration information, indication information indicating management information of the K AI models.

In the implementation example A, the network device may further receive the first configuration information, and the network device may further send, based on the first configuration information, the indication information indicating the management information of the K AI models. Then, after receiving the indication information, the terminal device can manage the K AI models based on the indication information. Therefore, an AI model can be managed in a communication network based on the indication information.

It should be understood that, in the implementation example A, the network device that determines the management information based on the first configuration information may be a core network device (that is, the core network device may send the management information to the terminal device through an access network device), or may be an access network device, or may be a device into which a core network device and an access network device are integrated. This is not limited herein.

Optionally, the first configuration information includes one or more of the following: an application scenario of the AI models corresponding to the X AI tasks, a selection condition of the AI models corresponding to the X AI tasks, an enabling condition of the AI models corresponding to the X AI tasks, an update condition of the AI models corresponding to the X AI tasks, a switching condition of the AI models corresponding to the X AI tasks, a fallback condition of the AI models corresponding to the X AI tasks, and data collection information of the AI models corresponding to the X AI tasks. The data collection information of the AI models corresponding to the X AI tasks includes one or more of the following: a data type, collection time, collection frequency, a collection location, and a collection quantity.

Implementation example B: The method shown in FIG. 2 further includes: in a possible implementation, the method further includes: The network device receives indication information indicating management information of the K AI models; and the network device sends the indication information indicating the management information of the K AI models.

In the implementation example B, the network device may receive and send the indication information indicating the management information of the K AI models, so that the network device, as a pass-through communication role, sends the indication information to the terminal device. Therefore, an AI model can be managed in a communication network based on the indication information.

It should be understood that, in the implementation example B, the device that determines the management information based on the first configuration information may be a core network device. Correspondingly, the core network device may send, to an access network device, the indication information indicating the management information of the K AI models. Subsequently, the access network device may perform pass-through processing on the indication information. In other words, the network device that serves as the pass-through communication role in the foregoing technical solution may be the access network device.

In a possible implementation, in the method shown in FIG. 2, the processing modes of the K AI models are indicated by the first indication information, and performance of the AI models may be further measured based on other information. In other words, in the method shown in FIG. 2, the method further includes: The network device receives indication information that is from the terminal device and that indicates model performance measurement results of the K AI models, to measure performance of an AI model deployed in a communication network. The following describes an indication of measurement on performance of an AI model by using some possible implementations.

Implementation example C: Before the network device receives the indication information indicating the model performance measurement results of the K AI models, the method further includes: The network device receives second configuration information, where the second configuration information is for configuring measurement information of AI models corresponding to Y AI tasks, and the Y AI tasks include the first AI task; and then the network device sends, based on the second configuration information, indication information indicating to report the model performance measurement results of the K AI models.

In the implementation example C, the network device may further receive the second configuration information, and send, based on the second configuration information, the indication information indicating to report the model performance measurement results of the K AI models. Therefore, the terminal device can send the model performance measurement results of the K AI models based on the indication information, to indicate measurement on performance of an AI model deployed in a communication network.

Optionally, in the implementation example C, the network device that determines, based on the second configuration information, the indication information indicating to report the model performance measurement results of the K AI models may be a core network device, or may be an access network device, or may be a device into which a core network device and an access network device are integrated. This is not limited herein.

Optionally, the second configuration information includes one or more of the following: a measurement object, a measurement cycle, a measurement triggering condition, and a manner of reporting a measurement result.

Implementation example D: Before the network device receives the indication information indicating the model performance measurement results of the K AI models, the method further includes: The network device receives indication information indicating to report the model performance measurement results of the K AI models; and the network device sends the indication information indicating to report the model performance measurement results of the K AI models.

In the implementation example D, the network device may further receive and send the indication information indicating to report the model performance measurement results of the K AI models, so that the network device, as a pass-through communication role, sends the indication information to the terminal device, to indicate measurement on performance of an AI model deployed in a communication network.

Optionally, in the implementation example D, the device that determines, based on the second configuration information, the indication information indicating to report the model performance measurement results of the K AI models may be a core network device. Correspondingly, the core network device may send the indication information to an access network device. Subsequently, the access network device may perform pass-through processing on the indication information. In other words, the network device that serves as the pass-through communication role in the foregoing technical solution may be the access network device.

In a possible implementation, in the method shown in FIG. 2, the processing modes of the K AI models are indicated by the first indication information, and data collection (or data report) of the AI models may be further implemented based on other information. In other words, in the method shown in FIG. 2, the method further includes: The network device receives, from the terminal device, data associated with the K AI models, to collect data associated with an AI model deployed in a communication network. The following describes a data collection process of an AI model by using some possible implementations.

Implementation example E: After the network device receives, from the terminal device, the data associated with the K AI models, the method further includes: The network device sends first data, where the first data is obtained by performing processing based on the data associated with the K AI models. Specifically, after the network device receives the data associated with the K AI models, the network device may perform processing based on the data associated with the K AI models to obtain the first data, and send the first data, so that a receiver (for example, a core network device or a first device) of the first data can obtain the first data.

Optionally, the first data is obtained by performing one or more processing such as data integration, preprocessing, and redundancy reduction based on the data associated with the K AI models.

Optionally, in the implementation example E, the network device that performs processing based on the data associated with the K AI models to obtain the first data may be a core network device, or may be an access network device, or may be a device into which a core network device and an access network device are integrated. This is not limited herein.

Implementation example F: After the network device receives, from the terminal device, the data associated with the K AI models, the method further includes: The network device sends the data associated with the K AI models. Specifically, after the network device receives the data associated with the K AI models, the network device, as a pass-through communication role, may send the data associated with the K AI models, so that a receiver of the data associated with the K AI models can further obtain other data (for example, the first data), to implement data collection.

Optionally, in the implementation example F, the network device that performs pass-through processing on the data associated with the K AI models may be an access network device. Subsequently, a core network device can obtain other data (for example, the first data) based on the data associated with the K AI models.

It should be understood that, in the implementation example E and the implementation example F, in the first mode, the data associated with the K AI models includes input data of the K AI models; and/or in the second mode, the data associated with the K AI models includes input data and label data of the K AI models.

In a possible implementation, in the method shown in FIG. 2, the processing modes of the K AI models are indicated by the first indication information, and the AI models may be further updated based on other information. In other words, in the method shown in FIG. 2, the method further includes: The network device receives indication information indicating K updated AI models, where the K updated AI models are obtained by processing the K AI models in the second mode. The second mode includes AI training. Correspondingly, the terminal device may process the K AI models in the second mode, to obtain the K updated AI models, and the terminal device may further send the indication information indicating the K updated AI models, so that the network device obtains the updated AI models. In this way, an AI model deployed in a communication network can be trained. The following describes an update process of an AI model by using some possible implementations.

Implementation example G: After the network device receives the indication information indicating the K updated AI models, the method further includes: The network device performs fusion on the K updated AI models to obtain a fusion result; and the network device sends indication information indicating the fusion result. Specifically, after the network device receives the indication information indicating the K updated AI models, the network device may further perform fusion on the K updated AI models to obtain the fusion result, and send the indication information indicating the fusion result, so that models are fused in an AI training scenario.

Optionally, in the implementation example G, the network device that performs fusion on the K updated AI models to obtain the fusion result may be a core network device, or may be an access network device, or may be a device into which a core network device and an access network device are integrated. This is not limited herein.

Implementation example H: After the network device receives the indication information indicating the K updated AI models, the method further includes: The network device sends indication information indicating the K updated AI models. Specifically, after the network device receives the indication information indicating the K updated AI models, the network device, as a pass-through communication role, may send the indication information indicating the K updated AI models, so that a receiver of the indication information can further implement model fusion.

Optionally, in the implementation example H, the network device that performs pass-through processing on the indication information indicating the K updated AI models may be an access network device. Subsequently, a core network device (or a first device) can perform model fusion based on the indication information.

In a possible implementation, in the method shown in FIG. 2, the processing modes of the K AI models are indicated by the first indication information, and the AI models may be further deployed based on other information. In other words, in the method shown in FIG. 2, the method further includes: The network device sends indication information indicating the K AI models, to deploy an AI model in a communication network.

Optionally, the K AI models may be preconfigured or predefined.

Optionally, the K AI models may be configured. The following describes a configuration process of deployment of an AI model by using some possible implementations.

Implementation example I: Before the network device sends the indication information indicating the K AI models, the method further includes: The network device receives third configuration information, where the third configuration information is for configuring P AI models, the P AI models correspond to the first AI task, and P is greater than or equal to K. Specifically, after receiving the third configuration information for configuring the P AI models, the network device may send, to the terminal device, the indication information indicating the K AI models. To be specific, the network device may screen the P AI models and select the required K AI models, and then may deploy the K AI models to the terminal device.

Optionally, the third configuration information includes at least one of the following: task type information of the first AI task, AI model type information of the P AI models, model scale information of the P AI models, and model performance requirement information of the P Al models.

Optionally, in the implementation example I, the network device that determines the K AI models based on the P AI models may be a core network device, or may be an access network device, or may be a device into which a core network device and an access network device are integrated. This is not limited herein.

Implementation example J: Before the network device sends the indication information indicating the K AI models, the method further includes: The network device receives indication information indicating the K AI models. Specifically, the network device serves as a pass-through communication role, and the network device may send, to the terminal device, the indication information indicating the K AI models, to deploy an AI model in a communication network.

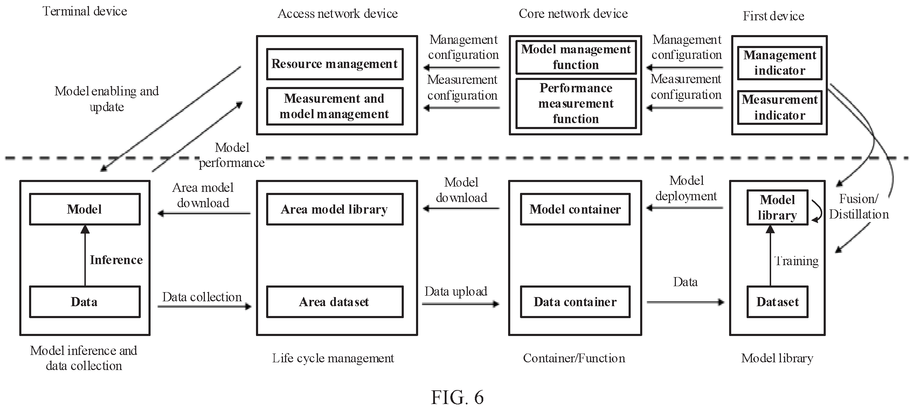

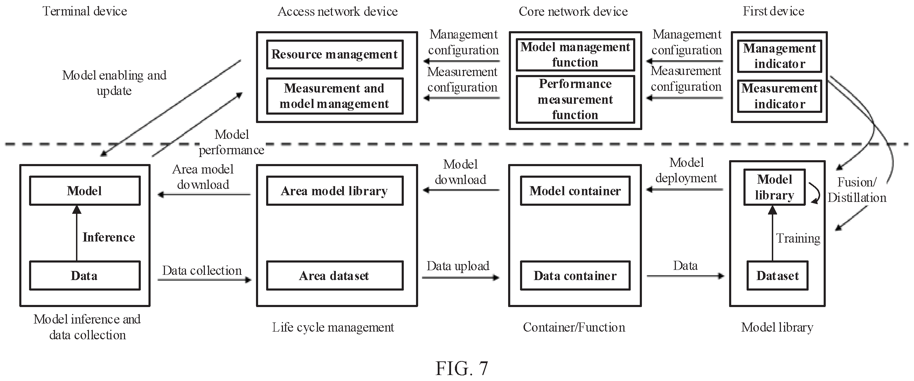

For ease of understanding the foregoing implementations, the following separately describes AI model inference and AI model training with reference to implementation examples shown in FIG. 6 and FIG. 7.

FIG. 6 is a diagram of an implementation of an AI model inference process.

As an AI service provider, a first device shown in FIG. 6 may maintain a training dataset and a machine learning model (or a model library). In other words, the machine learning model is trained by an OTT vendor based on the training dataset. The machine learning model may be trained by using a common training method, such as model fusion and model distillation. In addition, the OTT vendor sets a management indicator and a measurement indicator for an AI service, and configures the management indicator and the measurement indicator to a core network via management configuration and measurement configuration signaling, including but not limited to:
management configuration (refer to the implementation example A and the implementation example B): a type for configuring an AI service, an application scenario of a machine learning model for the AI service, an enabling condition, an update condition, a switching condition, a fallback condition, data collection configuration (a data type, collection time, collection frequency, a collection location, a collection quantity, and the like), and the like; and
measurement configuration (refer to the implementation example C and the implementation example D): an object for measurement configuration, a cycle, a triggering condition, a manner of reporting a measurement result, and the like.

A core network device shown in FIG. 6 may enable a model management function (AIMMF) and a performance measurement function (AIPMF) based on the management configuration and the measurement configuration, deliver the management configuration and the measurement configuration to a BS, and maintain a model container and a data container. The model container is used by the OTT vendor to deploy the machine learning model, and the data container is used to collect data (refer to the implementation example E and the implementation example F).

An access network device shown in FIG. 6 may receive the management configuration and the measurement configuration, perform model performance measurement based on the measurement configuration, and perform model life cycle management based on the management configuration, including but not limited to model selection, model enabling, model update, model switching, and model fallback. The access network device manages resources (such as computing resources, communication resources, and storage resources) related to model inference. The access network device downloads, from the core network model container, a model required by this area. The access network device collects data (locally or from an associated terminal).

A terminal device shown in FIG. 6 may download a required machine learning model from the associated access network device (refer to the implementation example I and the implementation example J), collect data, perform model inference, report the collected data to the access network device, measure model performance, and report a measurement result to the access network device.

FIG. 7 is a diagram of an implementation of an AI model training process.

As an AI service provider, a first device shown in FIG. 7 may define and describe a task of an AI service based on a requirement, and provide task configuration for a core network. In addition, the OTT vendor sets a management indicator and a measurement indicator for an AI service, and configures the management indicator and the measurement indicator to a core network via management configuration and measurement configuration signaling, including but not limited to:
management configuration (refer to the implementation example A and the implementation example B): a type for configuring an AI service, an application scenario of a machine learning model for the AI service, an enabling condition, an update condition, a switching condition, a fallback condition, data collection configuration (a data type, collection time, collection frequency, a collection location, a collection quantity, and the like), and the like;
measurement configuration (refer to the implementation example C and the implementation example D): an object for measurement configuration, a cycle, a triggering condition, a manner of reporting a measurement result, and the like; and
task configuration (refer to the implementation example I and the implementation example J), including a task type, a model type, a model scale, a performance requirement, and the like.

A core network device shown in FIG. 7 may enable an AI service function (AISF), a model management function (AIMMF), and a performance measurement function (AIPMF) based on the task description, the management configuration, and the measurement configuration that are provided by the OTT vendor, deliver the task configuration, the management configuration, and the measurement configuration to a BS, maintain a model container, for storing machine learning models trained by network elements such as a core network device, an access network device, and a terminal, and provide a model purchase service for OTT vendors.

An access network device shown in FIG. 7 may receive the task configuration, the management configuration, and the measurement configuration, and determine a machine learning model (that is, model construction) based on the task configuration. The model construction may be implemented by constructing a complete model based on a small model, or may be implemented by adding a branch model to a trunk model. The access network device performs model performance measurement based on the measurement configuration, and performs model life cycle management based on the management configuration, including but not limited to model selection, model enabling, model update, model switching, and model fallback. The access network device manages resources (such as computing resources, communication resources, and storage resources) related to model training. The access network device downloads, from the core network model container, a model required by this area, and reports a trained model to the core network model container. The access network device collects data (locally or from an associated terminal), constructs an area dataset (refer to the implementation example E and the implementation example F), and performs model training.

A terminal device shown in FIG. 7 may download a required machine learning model from the associated access network device, collect data, and perform model training. The terminal device may report the collected data to the access network device. The terminal device may measure model performance, and report a measurement result to the access network device. The terminal device may send a trained AI model (that is, an updated AI model) (refer to the implementation example G and the implementation example H).

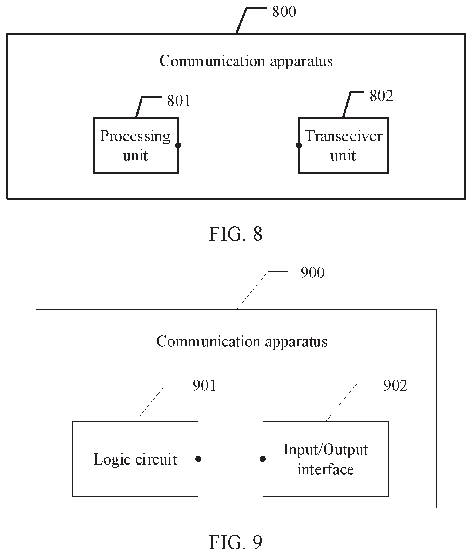

With reference to FIG. 8, an embodiment of this application provides a communication apparatus 800. The communication apparatus 800 can implement functions of the communication apparatus in the foregoing method embodiments, and therefore can achieve beneficial effects of the foregoing method embodiments. In an embodiment of this application, the communication apparatus 800 may be a terminal device, a network device, or a first device, or may be an integrated circuit or an element in a terminal device, a network device, or a first device, for example, a chip. In the following embodiments, an example in which the communication apparatus 800 is a terminal device, a network device, or a first device is used for description.

It should be noted that a transceiver unit 802 may include a sending unit and a receiving unit that are respectively configured to perform sending and receiving.

In a possible implementation, when the apparatus 800 is configured to perform the method performed by the terminal device in the foregoing embodiments, the apparatus 800 includes a processing unit 801 and the transceiver unit 802. The transceiver unit 802 is configured to receive first indication information, where the first indication information indicates that processing modes of K artificial intelligence AI models are a first mode or a second mode, the K AI models correspond to a first AI task, and K is a positive integer; and the first mode includes AI inference, and the second mode includes AI training. The processing unit 801 is configured to process the K AI models in the first mode or the second mode.

In a possible implementation, the transceiver unit 802 is further configured to receive indication information indicating management information of the K AI models.

In a possible implementation, the management information includes at least one of the following: model selection, model enabling, model update, model switching, and model fallback.

In a possible implementation, the transceiver unit 802 is further configured to send model performance measurement results of the K AI models.

In a possible implementation, the transceiver unit 802 is further configured to receive indication information indicating to report the model performance measurement results of the K AI models.

In a possible implementation, the transceiver unit 802 is further configured to send data associated with the K AI models.

In a possible implementation, in the first mode, the data associated with the K AI models includes input data of the K AI models; and/or in the second mode, the data associated with the K AI models includes input data and label data of the K AI models.

In a possible implementation, that the processing unit 801 is configured to process the K AI models in the second mode includes: processing the K AI models in the second mode to obtain K updated AI models; and sending indication information indicating the K updated AI models.

In a possible implementation, the transceiver unit 802 is further configured to receive indication information indicating the K AI models.

In a possible implementation, the first indication information is one of N pieces of indication information, the N pieces of indication information respectively indicate processing modes of AI models corresponding to N AI tasks, the processing modes include the first mode or the second mode, the N AI tasks include the first AI task, and N is a positive integer.

In a possible implementation, the transceiver unit 802 is further configured to send indication information indicating processing modes of AI models corresponding to M AI tasks, where M is a positive integer, the processing modes include the first mode or the second mode, and the M AI tasks include the first AI task.

In a possible implementation, when the apparatus 800 is configured to perform the method performed by the network device in the foregoing embodiments, the apparatus 800 includes a processing unit 801 and the transceiver unit 802. The transceiver unit 802 is configured to receive first indication information, where the first indication information indicates that processing modes of K artificial intelligence AI models are a first mode or a second mode, the K AI models correspond to a first AI task, and K is a positive integer; and the first mode includes AI inference, and the second mode includes AI training. The transceiver unit 802 is further configured to send the first indication information.

In a possible implementation, the transceiver unit 802 is further configured to receive first configuration information, where the first configuration information is for configuring management information of AI models corresponding to X AI tasks, the X AI tasks include the first AI task, and X is a positive integer; and the transceiver unit 802 is further configured to send, based on the first configuration information, indication information indicating management information of the K AI models.

In a possible implementation, the first configuration information includes one or more of the following: an application scenario of the AI models corresponding to the X AI tasks, a selection condition of the AI models corresponding to the X AI tasks, an enabling condition of the AI models corresponding to the X AI tasks, an update condition of the AI models corresponding to the X AI tasks, a switching condition of the AI models corresponding to the X AI tasks, a fallback condition of the AI models corresponding to the X AI tasks, and data collection information of the AI models corresponding to the X AI tasks.

In a possible implementation, the data collection information of the AI models corresponding to the X AI tasks includes one or more of the following: a data type, collection time, collection frequency, a collection location, and a collection quantity.

In a possible implementation, the transceiver unit 802 is further configured to receive indication information indicating management information of the K AI models; and the transceiver unit 802 is further configured to send the indication information indicating the management information of the K AI models.

In a possible implementation, the management information includes at least one of the following: model selection, model enabling, model update, model switching, and model fallback.

In a possible implementation, the transceiver unit 802 is further configured to receive indication information indicating model performance measurement results of the K AI models.

In a possible implementation, the transceiver unit 802 is further configured to receive second configuration information, where the second configuration information is for configuring measurement information of AI models corresponding to Y AI tasks, and the Y AI tasks include the first AI task; and the transceiver unit 802 is further configured to send, based on the second configuration information, indication information indicating to report the model performance measurement results of the K AI models.

In a possible implementation, the second configuration information includes one or more of the following: a measurement object, a measurement cycle, a measurement triggering condition, and a manner of reporting a measurement result.

In a possible implementation, the transceiver unit 802 is further configured to receive indication information indicating to report the model performance measurement results of the K AI models; and the transceiver unit 802 is further configured to send the indication information indicating to report the model performance measurement results of the K AI models.

In a possible implementation, the transceiver unit 802 is further configured to receive data associated with the K AI models.

In a possible implementation, the transceiver unit 802 is further configured to send first data, where the first data is obtained by performing processing based on the data associated with the K AI models.

In a possible implementation, the transceiver unit 802 is further configured to send data associated with the K AI models.

In a possible implementation, in the first mode, the data associated with the K AI models includes input data of the K AI models; and/or in the second mode, the data associated with the K AI models includes input data and label data of the K AI models.

In a possible implementation, the transceiver unit 802 is further configured to receive indication information indicating K updated AI models, where the K updated AI models are obtained by processing the K AI models in the second mode.

In a possible implementation, the communication apparatus further includes the processing unit 801. The processing unit 801 is configured to perform fusion on the K updated AI models to obtain a fusion result. The transceiver unit 802 is further configured to send indication information indicating the fusion result.

In a possible implementation, the transceiver unit 802 is further configured to send indication information indicating the K updated AI models.

In a possible implementation, the transceiver unit 802 is further configured to send indication information indicating the K AI models.

In a possible implementation, the transceiver unit 802 is further configured to receive third configuration information, where the third configuration information is for configuring P AI models, the P AI models correspond to the first AI task, and P is greater than or equal to K.

In a possible implementation, the transceiver unit 802 is further configured to receive the indication information indicating the K AI models.

In a possible implementation, the first indication information is one of N pieces of indication information, the N pieces of indication information respectively indicate processing modes of AI models corresponding to N AI tasks, the processing modes include the first mode or the second mode, the N AI tasks include the first AI task, and N is a positive integer.

In a possible implementation, the transceiver unit 802 is further configured to receive indication information indicating processing modes of AI models corresponding to M AI tasks, where M is a positive integer, the processing modes include the first mode or the second mode, and the M AI tasks include the first AI task.

In a possible implementation, the transceiver unit 802 is further configured to send the indication information indicating the processing modes of the AI models corresponding to the M AI tasks.

In a possible implementation, when the apparatus 800 is configured to perform the method performed by the first device in the foregoing embodiments, the apparatus 800 includes a processing unit 801 and the transceiver unit 802. The processing unit 801 is configured to determine first indication information, where the first indication information indicates that processing modes of K artificial intelligence AI models are a first mode or a second mode, the K AI models correspond to a first AI task, and K is a positive integer; and the first mode includes AI inference, and the second mode includes AI training. The transceiver unit 802 is configured to send the first indication information.

In a possible implementation, the transceiver unit 802 is further configured to send first configuration information, where the first configuration information is for configuring management information of AI models corresponding to X AI tasks, the X AI tasks include the first AI task, and X is a positive integer.

In a possible implementation, the first configuration information includes one or more of the following: an application scenario of the AI models corresponding to the X AI tasks, a selection condition of the AI models corresponding to the X AI tasks, an enabling condition of the AI models corresponding to the X AI tasks, an update condition of the AI models corresponding to the X AI tasks, a switching condition of the AI models corresponding to the X AI tasks, a fallback condition of the AI models corresponding to the X AI tasks, and data collection information of the AI models corresponding to the X AI tasks.

In a possible implementation, the data collection information of the AI models corresponding to the X AI tasks includes one or more of the following: a data type, collection time, collection frequency, a collection location, and a collection quantity.

In a possible implementation, the first configuration information is for determining management information of the K AI models, and the management information includes at least one of the following: model selection, model enabling, model update, model switching, and model fallback.

In a possible implementation, the transceiver unit 802 is further configured to receive indication information indicating model performance measurement results of the K AI models.

In a possible implementation, the transceiver unit 802 is further configured to send second configuration information, where the second configuration information is for configuring measurement information of AI models corresponding to Y AI tasks, and the Y AI tasks include the first AI task.

In a possible implementation, the second configuration information includes one or more of the following: a measurement object, a measurement cycle, a measurement triggering condition, and a manner of reporting a measurement result.

In a possible implementation, the transceiver unit 802 is further configured to receive data associated with the K AI models or first data, where the first data is obtained by performing processing based on the data associated with the K AI models.

In a possible implementation, in the first mode, the data associated with the K AI models includes input data of the K AI models; and/or in the second mode, the data associated with the K AI models includes input data and label data of the K AI models.

In a possible implementation, the transceiver unit 802 is further configured to receive indication information indicating K updated AI models, where the K updated AI models are obtained by processing the K AI models in the second mode; or the transceiver unit 802 is further configured to receive indication information indicating a fusion result, where the fusion result is obtained by performing fusion based on the K updated AI models.

In a possible implementation, the transceiver unit 802 is further configured to send third configuration information, where the third configuration information is for configuring P AI models, the P AI models correspond to the first AI task, and P is greater than or equal to K.

In a possible implementation, the first indication information is one of N pieces of indication information, the N pieces of indication information respectively indicate processing modes of AI models corresponding to N AI tasks, the processing modes include the first mode or the second mode, the N AI tasks include the first AI task, and N is a positive integer.

In a possible implementation, the transceiver unit 802 is further configured to receive indication information indicating processing modes of AI models corresponding to M AI tasks, where M is a positive integer, the processing modes include the first mode or the second mode, and the M AI tasks include the first AI task.

It should be noted that, for details about content such as information execution processes of the units of the communication apparatus 800, refer to the descriptions in the foregoing method embodiments of this application. Details are not described herein again.

FIG. 9 is a diagram of another structure of a communication apparatus 900 according to this application. The communication apparatus 900 includes a logic circuit 901 and an input/output interface 902. The communication apparatus 900 may be a chip or an integrated circuit.

The transceiver unit 802 shown in FIG. 8 may be a communication interface. The communication interface may be the input/output interface 902 in FIG. 9. The input/output interface 902 may include an input interface and an output interface. Alternatively, the communication interface may be a transceiver circuit, and the transceiver circuit may include an input interface circuit and an output interface circuit.

Optionally, the input/output interface 902 is configured to receive first indication information, where the first indication information indicates that processing modes of K artificial intelligence AI models are a first mode or a second mode, the K AI models correspond to a first AI task, and K is a positive integer; and the first mode includes AI inference, and the second mode includes AI training; and the logic circuit 901 is configured to process the K AI models in the first mode or the second mode.

Optionally, the input/output interface 902 is configured to receive first indication information, where the first indication information indicates that processing modes of K artificial intelligence AI models are a first mode or a second mode, the K AI models correspond to a first AI task, and K is a positive integer; and the first mode includes AI inference, and the second mode includes AI training; and the input/output interface 902 is further configured to send the first indication information.

Optionally, the logic circuit 901 is configured to determine first indication information, where the first indication information indicates that processing modes of K artificial intelligence AI models are a first mode or a second mode, the K AI models correspond to a first AI task, and K is a positive integer; and the first mode includes AI inference, and the second mode includes AI training; and the input/output interface 902 is configured to send the first indication information.

The logic circuit 901 and the input/output interface 902 may further perform other steps performed by the terminal device, the network device, or the first device in any embodiment, and achieve corresponding beneficial effects. Details are not described herein again.

In a possible implementation, the processing unit 801 shown in FIG. 8 may be the logic circuit 901 in FIG. 9.

Optionally, the logic circuit 901 may be a processing apparatus. Some or all of functions of the processing apparatus may be implemented through software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. The memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated chips (application-specific integrated circuit, ASIC), systems on chips (system on chip, SoC), central processing units (central processing unit, CPU), network processors (network processor, NP), digital signal processing circuits (digital signal processor, DSP), microcontrollers (microcontroller unit, MCU), programmable controllers (programmable logic device, PLD), or other integrated chips, or any combination of the foregoing chips or processors.

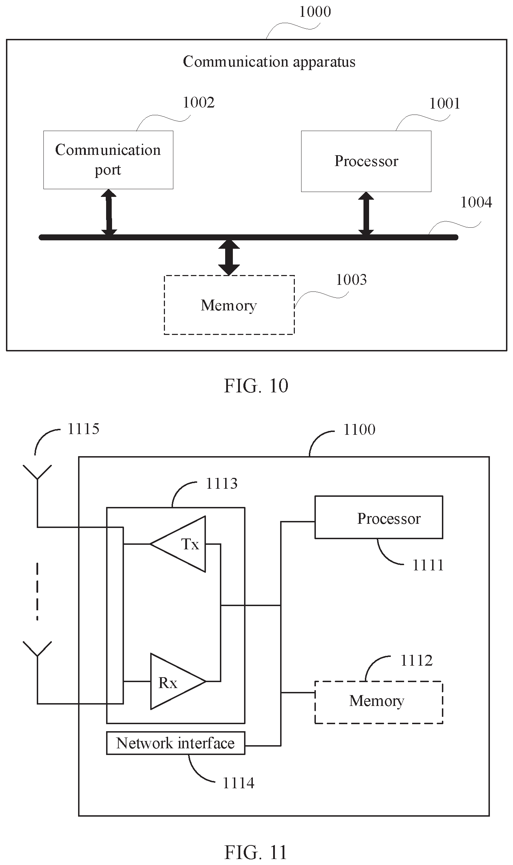

FIG. 10 shows a communication apparatus 1000 in the foregoing embodiments according to an embodiment of this application. The communication apparatus 1000 may be specifically the communication apparatus serving as the terminal device in the foregoing embodiments. In the example shown in FIG. 10, the terminal device is implemented by using a terminal device (or a component in a terminal device).

In a diagram of a possible logical structure of the communication apparatus 1000, the communication apparatus 1000 may include but is not limited to at least one processor 1001 and a communication port 1002.

The transceiver unit 802 shown in FIG. 8 may be a communication interface. The communication interface may be the communication port 1002 in FIG. 10. The communication port 1002 may include an input interface and an output interface. Alternatively, the communication port 1002 may be a transceiver circuit, and the transceiver circuit may include an input interface circuit and an output interface circuit.

Further, optionally, the apparatus may further include at least one of a memory 1003 and a bus 1004. In an embodiment of this application, the at least one processor 1001 is configured to control and process an action of the communication apparatus 1000.

In addition, the processor 1001 may be a central processing unit, a general-purpose processor, a digital signal processor, an application-specific integrated circuit, a field-programmable gate array or another programmable logic device, a transistor logic device, a hardware component, or any combination thereof. The processor 1001 may implement or execute logical blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 1000 shown in FIG. 10 may be specifically configured to implement the steps implemented by the terminal device in the foregoing method embodiments, and achieve the technical effects corresponding to the terminal device. For a specific implementation of the communication apparatus shown in FIG. 10, refer to the descriptions in the foregoing method embodiments. Details are not described herein again.

FIG. 11 is a diagram of a structure of a communication apparatus 1100 in the foregoing embodiments according to an embodiment of this application. The communication apparatus 1100 may be specifically the communication apparatus serving as the network device in the foregoing embodiments. In the example shown in FIG. 11, the network device is implemented by using a network device (or a component in a network device). For a structure of the communication apparatus, refer to the structure shown in FIG. 11.

The communication apparatus 1100 includes at least one processor 1111 and at least one network interface 1114. Further, optionally, the communication apparatus further includes at least one memory 1112, at least one transceiver 1113, and one or more antennas 1115. The processor 1111, the memory 1112, the transceiver 1113, and the network interface 1114 are connected, for example, connected through a bus. In an embodiment of this application, the connection may include various interfaces, transmission lines, buses, or the like. This is not limited in embodiments. The antenna 1115 is connected to the transceiver 1113. The network interface 1114 is configured to enable the communication apparatus to communicate with another communication device through a communication link. For example, the network interface 1114 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 802 shown in FIG. 8 may be a communication interface. The communication interface may be the network interface 1114 in FIG. 11. The network interface 1114 may include an input interface and an output interface. Alternatively, the network interface 1114 may be a transceiver circuit, and the transceiver circuit may include an input interface circuit and an output interface circuit.

The processor 1111 is mainly configured to process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1111 in FIG. 11. A person skilled in the art can understand that the baseband processor and the central processing unit may alternatively be processors independent of each other, and are interconnected through a technology like a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 and the processor 1111 may be integrated together, for example, integrated into one chip. The memory 1112 can store program code for performing the technical solutions in embodiments of this application, and execution of the program code is controlled by the processor 1111. Various types of executed computer program code may also be considered as a driver of the processor 1111.

FIG. 11 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 1113 may be configured to support receiving or sending of a radio frequency signal between the communication apparatus and a terminal. The transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to receive the radio frequency signal from the antenna, convert the radio frequency signal into a digital baseband signal or a digital intermediate frequency signal, and provide the digital baseband signal or the digital intermediate frequency signal for the processor 1111, so that the processor 1111 further processes the digital baseband signal or the digital intermediate frequency signal, for example, performs demodulation and decoding. In addition, the transmitter Tx of the transceiver 1113 is further configured to receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-level or multi-level up frequency mixing and digital-to-analog conversion on the modulated digital baseband signal or digital intermediate frequency signal to obtain the radio frequency signal. A sequence of the up frequency mixing and the digital-to-analog conversion is adjustable. The digital baseband signal and the digital intermediate frequency signal may be collectively referred to as a digital signal.

The transceiver 1113 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit. The receiving unit may also be referred to as a receiver, an input interface, a receiving circuit, or the like. The sending unit may be referred to as a transmitter, a transmitter machine, a transmitting circuit, or the like.

It should be noted that the communication apparatus 1100 shown in FIG. 11 may be specifically configured to implement the steps implemented by the network device in the foregoing method embodiments, and achieve the technical effects corresponding to the network device. For a specific implementation of the communication apparatus 1100 shown in FIG. 11, refer to the descriptions in the foregoing method embodiments. Details are not described herein again.

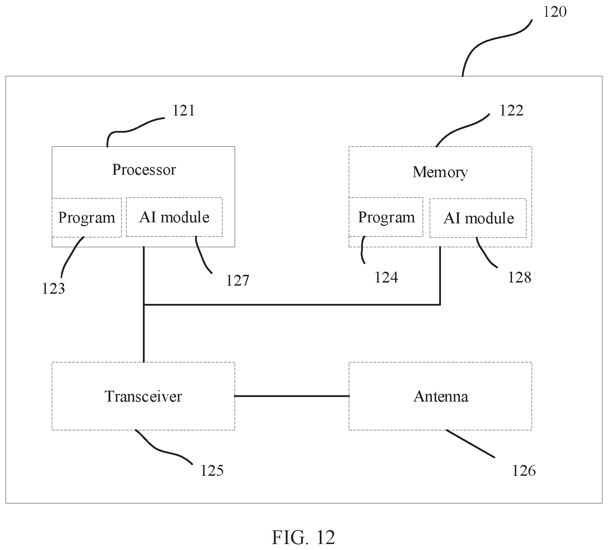

FIG. 12 is a diagram of a structure of a communication apparatus in the foregoing embodiments according to an embodiment of this application.

It may be understood that the communication apparatus 120 includes, for example, a module, a unit, an element, a circuit, or an interface, to be appropriately configured together to perform the technical solutions provided in this application. The communication apparatus 120 may be the terminal device or the network device described above, or may be a component (for example, a chip) in these devices, to implement the method described in the following method embodiments. The communication apparatus 120 includes one or more processors 121. The processor 121 may be a general-purpose processor, a dedicated processor, or the like, for example, may be a baseband processor or a central processing unit. The baseband processor may be configured to process a communication protocol and communication data. The central processing unit may be configured to: control the communication apparatus (such as a RAN node, a terminal, or a chip), execute a software program, and process data of the software program.

Optionally, in a design, the processor 121 may include a program 123 (which may also be referred to as code or instructions sometimes). The program 123 may be run on the processor 121, so that the communication apparatus 120 performs the method described in the foregoing embodiments. In still another possible design, the communication apparatus 120 includes a circuit (not shown in FIG. 12).

Optionally, the communication apparatus 120 may include one or more memories 122, storing a program 124 (which may also be referred to as code or instructions sometimes). The program 124 may be run on the processor 121, so that the communication apparatus 120 performs the method described in the foregoing method embodiments.

Optionally, the processor 121 and/or the memory 122 may include AI modules 127 and 128, and the AI module is configured to implement an Al-related function. The AI module may be implemented by software, hardware, or a combination of software and hardware. For example, the AI module may include a radio intelligence control (radio intelligence control, RIC) module. For example, the AI module may be near-real-time RIC or non-real-time RIC.

Optionally, the processor 121 and/or the memory 122 may further store data. The processor and the memory may be separately disposed, or may be integrated together.

Optionally, the communication apparatus 120 may further include a transceiver 125 and/or an antenna 126. The processor 121 sometimes may also be referred to as a processing unit, and controls a communication apparatus (for example, a RAN node or a terminal). The transceiver 125 sometimes may also be referred to as a transceiver unit, a transceiver machine, a transceiver circuit, or a transceiver, and is configured to implement a transceiver function of the communication apparatus through the antenna 126.

The transceiver unit 802 shown in FIG. 8 may be a communication interface. The communication interface may be the transceiver 125 in FIG. 12. The transceiver 125 may include an input interface and an output interface. Alternatively, the transceiver 125 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method according to the possible implementations of the terminal device, the network device, or the first device in the foregoing embodiments.

An embodiment of this application further provides a computer program product (also referred to as a computer program). When the computer program product is executed by the processor, the processor performs the method according to the possible implementations of the terminal device, the network device, or the first device.

An embodiment of this application further provides a chip system. The chip system includes at least one processor configured to support a communication apparatus to implement the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device, the network device, or the first device in the foregoing method embodiments.

An embodiment of this application further provides a communication system. The communication system includes at least two of the terminal device, the network device, or the first device in any one of the foregoing embodiments.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. If the integrated unit is implemented in a form of a software functional unit and is sold or used as an independent product, the integrated unit may be stored in a computer-readable storage medium. Based on such an understanding, the technical solutions of this application essentially, or the part making a contribution, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
receiving first indication information, wherein the first indication information indicates that processing modes of K artificial intelligence AI models are a first mode or a second mode, the K AI models correspond to a first AI task, and K is a positive integer; and the first mode comprises AI inference, and the second mode comprises AI training; and
processing the K AI models in the first mode or the second mode.

2. The method according to claim 1, wherein the method further comprises:
receiving indication information indicating management information of the K AI models.

3. The method according to claim 2, wherein the management information comprises at least one of the following:
model selection, model enabling, model update, model switching, and model fallback.

4. The method according to any one of claims 1 to 3, wherein after processing the K AI models in the first mode or the second mode, the method further comprises:
sending model performance measurement results of the K AI models.

5. The method according to claim 4, wherein the method further comprises:
receiving indication information indicating to report the model performance measurement results of the K AI models.

6. The method according to any one of claims 1 to 5, wherein the method further comprises:
sending data associated with the K AI models.

7. The method according to claim 6, wherein
in the first mode, the data associated with the K AI models comprises input data of the K AI models; and/or
in the second mode, the data associated with the K AI models comprises input data and label data of the K AI models.

8. The method according to any one of claims 1 to 7, wherein processing the K AI models in the second mode comprises:
processing the K AI models in the second mode to obtain K updated AI models; and
sending indication information indicating the K updated AI models.

9. The method according to any one of claims 1 to 8, wherein the method further comprises:
receiving indication information indicating the K AI models.

10. The method according to any one of claims 1 to 9, wherein the first indication information is one of N pieces of indication information, the N pieces of indication information respectively indicate processing modes of AI models corresponding to N AI tasks, the processing modes comprise the first mode or the second mode, the N AI tasks comprise the first AI task, and N is a positive integer.

11. The method according to any one of claims 1 to 10, wherein the method further comprises:
sending indication information indicating processing modes of AI models corresponding to M AI tasks, wherein M is a positive integer, the processing modes comprise the first mode or the second mode, and the M AI tasks comprise the first AI task.

12. A communication method, comprising:
receiving first indication information, wherein the first indication information indicates that processing modes of K artificial intelligence AI models are a first mode or a second mode, the K AI models correspond to a first AI task, and K is a positive integer; and the first mode comprises AI inference, and the second mode comprises AI training; and
sending the first indication information.

13. The method according to claim 12, wherein the method further comprises:
receiving first configuration information, wherein the first configuration information is for configuring management information of AI models corresponding to X AI tasks, the X AI tasks comprise the first AI task, and X is a positive integer; and
sending, based on the first configuration information, indication information indicating management information of the K AI models.

14. The method according to claim 13, wherein the first configuration information comprises one or more of the following:
an application scenario of the AI models corresponding to the X AI tasks, a selection condition of the AI models corresponding to the X AI tasks, an enabling condition of the AI models corresponding to the X AI tasks, an update condition of the AI models corresponding to the X AI tasks, a switching condition of the AI models corresponding to the X AI tasks, a fallback condition of the AI models corresponding to the X AI tasks, and data collection information of the AI models corresponding to the X AI tasks.

15. The method according to claim 14, wherein the data collection information of the AI models corresponding to the X AI tasks comprises one or more of the following:
a data type, collection time, collection frequency, a collection location, and a collection quantity.

16. The method according to claim 12, wherein the method further comprises:
receiving indication information indicating management information of the K AI models; and
sending the indication information indicating the management information of the K AI models.

17. The method according to any one of claims 13 to 16, wherein the management information comprises at least one of the following:
model selection, model enabling, model update, model switching, and model fallback.

18. The method according to any one of claims 12 to 16, wherein the method further comprises:
receiving indication information indicating model performance measurement results of the K AI models.

19. The method according to claim 18, wherein before receiving the indication information indicating the model performance measurement results of the K AI models, the method further comprises:
receiving second configuration information, wherein the second configuration information is for configuring measurement information of AI models corresponding to Y AI tasks, and the Y AI tasks comprise the first AI task; and
sending, based on the second configuration information, indication information indicating to report the model performance measurement results of the K AI models.

20. The method according to claim 19, wherein the second configuration information comprises one or more of the following:
a measurement object, a measurement cycle, a measurement triggering condition, and a manner of reporting a measurement result.

21. The method according to claim 18, wherein before receiving the indication information indicating the model performance measurement results of the K AI models, the method further comprises:
receiving indication information indicating to report the model performance measurement results of the K AI models; and
sending the indication information indicating to report the model performance measurement results of the K AI models.

22. The method according to any one of claims 12 to 21, wherein the method further comprises:
receiving data associated with the K AI models.

23. The method according to claim 22, wherein the method further comprises:
sending first data, wherein the first data is obtained by performing processing based on the data associated with the K AI models.

24. The method according to claim 22, wherein the method further comprises:
sending the data associated with the K AI models.

25. The method according to any one of claims 22 to 24, wherein
in the first mode, the data associated with the K AI models comprises input data of the K AI models; and/or
in the second mode, the data associated with the K AI models comprises input data and label data of the K AI models.

26. The method according to any one of claims 12 to 25, wherein the method further comprises:
receiving indication information indicating the K updated AI models, wherein the K updated AI models are obtained by processing the K AI models in the second mode.

27. The method according to claim 26, wherein the method further comprises:
performing fusion on the K updated AI models to obtain a fusion result; and
sending indication information indicating the fusion result.

28. The method according to claim 26, wherein the method further comprises:
sending the indication information indicating the K updated AI models.

29. The method according to any one of claims 12 to 28, wherein the method further comprises:
sending indication information indicating the K AI models.

30. The method according to claim 29, wherein the method further comprises:
receiving third configuration information, wherein the third configuration information is for configuring P AI models, the P AI models correspond to the first AI task, and P is greater than or equal to K.

31. The method according to claim 30, wherein the third configuration information comprises at least one of the following:
task type information of the first AI task, AI model type information of the P AI models, model scale information of the P AI models, and model performance requirement information of the P AI models.

32. The method according to claim 29, wherein the method further comprises:
receiving the indication information indicating the K AI models.

33. The method according to any one of claims 12 to 32, wherein the first indication information is one of N pieces of indication information, the N pieces of indication information respectively indicate processing modes of AI models corresponding to N AI tasks, the processing modes comprise the first mode or the second mode, the N AI tasks comprise the first AI task, and N is a positive integer.

34. The method according to any one of claims 12 to 33, wherein the method further comprises:
receiving indication information indicating processing modes of AI models corresponding to M AI tasks, wherein M is a positive integer, the processing modes comprise the first mode or the second mode, and the M AI tasks comprise the first AI task.

35. The method according to claim 34, wherein the method further comprises:
sending the indication information indicating the processing modes of the AI models corresponding to the M AI tasks.

36. A communication method, comprising:
determining first indication information, wherein the first indication information indicates that processing modes of K artificial intelligence AI models are a first mode or a second mode, the K AI models correspond to a first AI task, and K is a positive integer; and the first mode comprises AI inference, and the second mode comprises AI training; and
sending the first indication information.

37. The method according to claim 36, wherein the method further comprises:
sending first configuration information, wherein the first configuration information is for configuring management information of AI models corresponding to X AI tasks, the X AI tasks comprise the first AI task, and X is a positive integer.

38. The method according to claim 37, wherein the first configuration information comprises one or more of the following:
an application scenario of the AI models corresponding to the X AI tasks, a selection condition of the AI models corresponding to the X AI tasks, an enabling condition of the AI models corresponding to the X AI tasks, an update condition of the AI models corresponding to the X AI tasks, a switching condition of the AI models corresponding to the X AI tasks, a fallback condition of the AI models corresponding to the X AI tasks, and data collection information of the AI models corresponding to the X AI tasks.

39. The method according to claim 38, wherein the data collection information of the AI models corresponding to the X AI tasks comprises one or more of the following:
a data type, collection time, collection frequency, a collection location, and a collection quantity.

40. The method according to any one of claims 37 to 39, wherein the first configuration information is for determining management information of the K AI models, and the management information comprises at least one of the following:
model selection, model enabling, model update, model switching, and model fallback.

41. The method according to any one of claims 36 to 40, wherein the method further comprises:
receiving indication information indicating model performance measurement results of the K AI models.

42. The method according to claim 41, wherein before receiving the indication information indicating the model performance measurement results of the K AI models, the method further comprises:
sending second configuration information, wherein the second configuration information is for configuring measurement information of AI models corresponding to Y AI tasks, and the Y AI tasks comprise the first AI task.

43. The method according to claim 42, wherein the second configuration information comprises one or more of the following:
a measurement object, a measurement cycle, a measurement triggering condition, and a manner of reporting a measurement result.

44. The method according to any one of claims 36 to 43, wherein the method further comprises:
receiving data associated with the K AI models or first data, wherein the first data is obtained by performing processing based on the data associated with the K AI models.

45. The method according to claim 44, wherein
in the first mode, the data associated with the K AI models comprises input data of the K AI models; and/or
in the second mode, the data associated with the K AI models comprises input data and label data of the K AI models.

46. The method according to any one of claims 36 to 45, wherein the method further comprises:
receiving indication information indicating the K updated AI models, wherein the K updated AI models are obtained by processing the K AI models in the second mode; or
receiving indication information indicating a fusion result, wherein the fusion result is obtained by performing fusion based on the K updated AI models.

47. The method according to any one of claims 36 to 46, wherein the method further comprises:
sending third configuration information, wherein the third configuration information is for configuring P AI models, the P AI models correspond to the first AI task, and P is greater than or equal to K.

48. The method according to claim 47, wherein the third configuration information comprises at least one of the following:
task type information of the first AI task, AI model type information of the P AI models, model scale information of the P AI models, and model performance requirement information of the P AI models.

49. The method according to any one of claims 36 to 48, wherein the first indication information is one of N pieces of indication information, the N pieces of indication information respectively indicate processing modes of AI models corresponding to N AI tasks, the processing modes comprise the first mode or the second mode, the N AI tasks comprise the first AI task, and N is a positive integer.

50. The method according to any one of claims 36 to 49, wherein the method further comprises:
receiving indication information indicating processing modes of AI models corresponding to M AI tasks, wherein M is a positive integer, the processing modes comprise the first mode or the second mode, and the M AI tasks comprise the first AI task.

51. A communication apparatus, comprising a module configured to perform the method according to any one of claims 1 to 50.

52. A communication apparatus, comprising at least one processor, wherein the at least one processor is coupled to a memory, and the at least one processor is configured to perform the method according to any one of claims 1 to 50.

53. The communication apparatus according to claim 52, wherein the communication apparatus is a chip or a chip system.

54. A readable storage medium, wherein the storage medium stores a computer program or instructions, and when the computer program or instructions are executed by a communication apparatus, the method according to any one of claims 1 to 50 is implemented.

55. A computer program product, comprising instructions, wherein when the instructions are run on a computer, the computer is enabled to perform the method according to any one of claims 1 to 50.
